(19) Europäisches Patentamt
European Patent Office
Office européen des brevets

(11) **EP 2 204 224 A1**

(12) **EUROPEAN PATENT APPLICATION**
published in accordance with Art. 153(4) EPC

(43) Date of publication:
**07.07.2010 Bulletin 2010/27**

(51) Int Cl.:
*A63F 9/12* (2006.01)  *G09B 23/04* (2006.01)
*G09B 23/26* (2006.01)

(21) Application number: **09762549.5**

(22) Date of filing: **12.06.2009**

(86) International application number:
**PCT/JP2009/060763**

(87) International publication number:
**WO 2009/151119 (17.12.2009 Gazette 2009/51)**

(84) Designated Contracting States:
**AT BE BG CH CY CZ DE DK EE ES FI FR GB GR
HR HU IE IS IT LI LT LU LV MC MK MT NL NO PL
PT RO SE SI SK TR**
Designated Extension States:
**AL BA RS**

(30) Priority: **14.06.2008 JP 2008156057
17.10.2008 JP 2008268221
28.10.2008 JP 2008277198**

(71) Applicant: **TOKAI UNIVERSITY EDUCATIONAL
SYSTEM
Shibuya-ku
Tokyo 151-0063 (JP)**

(72) Inventors:
• **AKIYAMA Hitoshi**
  **Tokyo 151-0063 (JP)**
• **NAKAMURA Gisaku**
  **Tokyo 151-0063 (JP)**
• **SATO Ikuro**
  **Sendai-shi**
  **Miyagi 981-0911 (JP)**
• **TAMIYA Norihisa**
  **Houfu-shi**
  **Yamaguchi 747-0821 (JP)**

(74) Representative: **Ilgart, Jean-Christophe
Brevalex
3, rue du Docteur Lancereaux
75008 Paris (FR)**

(54) **THREE-DIMENSIONAL PUZZLE**

(57)    A three-dimensional puzzle which forms a regular polyhedron and has not conventionally existed is realized. In addition, a three-dimensional puzzle which realizes a Fedrov space filling solid and has not conventionally existed is realized. According to the invention, a three-dimensional puzzle is provided having a regular polyhedron consisting of a plurality of convex polyhedrons which fill an interior of the regular polyhedron comprising the plurality of convex polyhedrons having a plurality of a pair of convex polyhedrons in a mirroring image relationship, wherein the plurality of convex polyhedrons are indivisible into two or more congruent shaped polyhedrons. In addition, the plurality of convex polyhedrons may be four convex polyhedrons and include three pairs of convex polyhedrons in a mirroring image relationship. Further the plurality of convex polyhedrons may be five convex polyhedrons and include four pairs of convex polyhedrons in a mirroring image relationship.

Fig. 1

**Description**

TECHNICAL FIELD

The present invention is related to a three-dimensional puzzle. In particular, the present invention is related to a regular polyhedron puzzle which includes a plurality of convex polyhedrons which fill an interior, and a three-dimensional puzzle which can realize a Fedorov space-filling three dimensional solid.

TECHNICAL BACKGROUND

A regular polyhedron puzzle is known in which the regular polyhedron is divided into several convex polyhedrons. The convex polyhedrons which form this conventional regular polyhedron puzzle do not have particular regularity or characteristics, and are appropriately divided in order to adjust the difficulty and complexity of the puzzle.

PRIOR ART DOCUMENTS

PATENT DOCUMENTS

> Patent Document 1: Japan Laid Open Utility Model Publication No. S63-200867
> Patent Document 2: Japan Laid Open Patent Publication No. S58-049168
> Patent Document 3: Japan Registered Utility Model Application No. 3107739
> Patent Document 4: International Laid Open Pamphlet No. 2006/075666
> Patent Document 5: Japan Laid Open Patent Publication No. H03-155891

SUMMARY OF THE INVENTION

PROBLEMS TO BE SOLVED BY THE INVENTON

The present invention forms a regular polyhedron and realizes a three-dimensional puzzle which has not conventionally existed. In addition, it is possible to realize a Fedrov space filling solid and realize a three-dimensional puzzle which has not conventionally existed.

MEANS FOR SOLVING THE PROBLEMS

According to one embodiment of the present invention, a three-dimensional puzzle is provided including four types of convex polyhedrons from which a regular tetrahedron, a cube, a regular octahedron, a regular dodecahedron or a regular icosahedron are formed, wherein three types among the four types of convex polyhedrons each having a pair of convex polyhedrons in a mirroring image relationship, the four types of convex polyhedrons are indivisible into two or more congruent shaped polyhedrons, and the regular tetrahedron, the cube, the regular octahedron, the regular dodecahedron and the regular icosahedron are formed using only the four types of convex polyhedrons so that the interior of the regular tetrahedron, the cube, the regular octahedron, the regular dodecahedron and the regular icosahedron are filled.

In addition, according to one embodiment of the present invention a three-dimensional puzzle is provided including five types of convex polyhedrons from which a regular tetrahedron, a cube, a regular octahedron, a regular dodecahedron or a regular icosahedron are formed, wherein four types among the five types of convex polyhedrons each having a pair of convex polyhedrons in a mirroring image relationship, the five types of convex polyhedrons are indivisible into two or more congruent shaped polyhedrons, and the regular tetrahedron, the cube, the regular octahedron, the regular dodecahedron and the regular icosahedron are formed using only the five types of convex polyhedrons so that the interior of the regular tetrahedron, the cube, the regular octahedron, the regular dodecahedron and the regular icosahedron are filled.

According to one embodiment of the present invention, a Fedorov space-filling three-dimensional puzzle is provided including a plurality of first convex polyhedrons and a plurality of second convex polyhedrons which are in a mirroring relationship with the first convex polyhedrons from which the three-dimensional puzzle is formed, wherein the plurality of first convex polyhedrons and the plurality of second convex polyhedrons each are indivisible into two or more congruent shaped polyhedrons, and the plurality of first convex polyhedrons and the plurality of second convex polyhedrons form all the Fedorov space-filling three dimensional solids by filling the interior of all the Fedorov space-filling three dimensional solids.

The Fedorov space-filling three-dimensional puzzle may also include an elongated rhombic dodecahedron which is formed using the plurality of first convex polyhedrons and the plurality of second convex polyhedrons includes a truncated octahedron, a parallel hexahedron, a skewed hexagonal prism and a rhombic dodecahedron.

EFFECTS OF THE INVENTION

Because the three-dimensional puzzle of the present invention is formed with the minimum number of atoms (convex polyhedrons) for filing all of the regular polyhedrons, it is possible to form all of the regular polyhedrons (regular tetrahedron, cube, regular octahedron, regular dodecahedron and regular icosahedron) even if the number of parts is small. In addition, it is possible to visually prove the novel theorem discovered by the inventors and the present invention can be used as an excellent educational material for explaining this theorem.

According to the three-dimensional puzzle of the present invention, by using a different atom in addition to the minimum number of atoms for constructing all of the regular polyhedrons, it is possible to form a cube and regular dodecahedron without using one of the minimum number of atoms. In addition, it is possible to visually explain the novel theorem discovered by the inventors, compare both puzzles by a transformation example which uses a different atom, and the present invention can be used as an excellent educational material for explaining this theorem.

According to the three-dimensional puzzle of the present invention, even if one of the minimum number of atoms for constructing all of the regular polyhedrons is not used, it is possible to form a regular polyhedron, cube and regular dodecahedron by using a different atom. In addition, it is possible to visually explain the novel theorem discovered by the inventors, compare both puzzles by a transformation example which uses a different atom, and the present invention can be used as an excellent educational material for explaining this theorem.

According to the present invention, it is possible to realize a Fedorov space-filling solid and provide a three-dimensional puzzle which has not existed until now.

BREIF EXPLANATON OF THE DRAWINGS

Fig. 1 is a diagram which shows a three-dimensional puzzle (regular tetrahedron) 100 related to one embodiment of the present invention.

Fig. 2 (a) is a diagram which shows a cube 200, Fig. 2 (b) is a diagram which shows a triangular pyramid 201 including a peak B which has been cut away.

Fig. 3 (a) is a diagram which shows the appearance of forming a quadrangular pyramid 301 from four triangular pyramids 201, Fig. 3 (b) is a diagram which shows the appearance of forming a regular octahedron 300 from two quadrangular pyramids 301.

Fig. 4 (a) is a diagram which shows three points Q, T, U respectively placed on the three edges of the triangular pyramid 201, Fig. 4 (b) is a diagram which shows a triangular pyramid 203 including a peak A which has been cut away from the triangular pyramid 201.

Fig. 5 (a) and (b) are diagrams which show the triangular pyramid 203 including the peaks C, F which has been cut away, Fig. 5 (c) is a diagram which shows a regular icosahedron 400 formed from four pairs of a heptahedron 207 and a mirror image symmetrical heptahedron 209.

Fig. 6 (a) is a diagram which shows a regular dodecahedron 500, Fig. 6 (b) is a diagram which shows a cut away through a plane which passes through the peaks A, B, C, D and a plane which passes through the peaks A, B, E, F, Fig. 6 (c) shows the appearance of the cube 200 which is left at the center of the cut away.

Fig. 7 (a) is a diagram which shows a view of the regular tetrahedron 100 again, Fig. 7 (b) is a diagram which shows the regular tetrahedron 100 cut away through a plane which passes through the center points I, J, K, L on the four edges AF, FC, CH, and HA, Fig. 7 (c) is a diagram of an extracted prism 101, Fig. 7 (d) is a diagram of a cut away through a plane which passes through three points J, L, M when M is the center point of the edge FH, Fig. 7 (e) is a diagram in which a pentahedron 103 is divided into two congruent tetrahedrons 110 and 111.

Fig. 8 is a diagram which shows a development of a piece 110 which is the shape of an atom $\alpha$ which forms the three-dimensional puzzle related to one embodiment of the present invention.

Fig. 9 is a diagram which shows a view of an equihepta 207 again, Fig. 9 (b) is a diagram which shows the appearance of the equihepta divided into three solids.

Fig. 10 is a development of a piece 210 which is the shape of an atom $\beta$ which forms the three-dimensional puzzle related to one embodiment of the present invention.

Fig. 11 is a development of a piece 203 which is the shape of an atom $\gamma$ which forms the three-dimensional puzzle related to one embodiment of the present invention.

Fig. 12 (a) is a diagram which shows a roof 501 related to one embodiment of the present invention again, Fig. 12 (b) shows a piece 510 which is the shape of an atom δ which forms the three-dimensional puzzle related to one embodiment of the present invention.

Fig. 13 shows the piece 510 which is the shape of an atom δ which forms the three-dimensional puzzle related to one embodiment of the present invention.

Fig. 14 is a diagram which shows a cube three-dimensional puzzle 200 related to one embodiment of the present invention.

Fig. 15 is a diagram of parts 201 of a triangular pyramid related to one embodiment of the present invention which is formed using parts 207 comprised of a piece 210 which is the shape of the atom β and a piece 203 which is the shape of the atom γ.

Fig. 16 is a diagram of parts 207 related to one embodiment of the present invention which is formed using a piece 210 which is the shape of three atoms β.

Fig. 17 is a diagram which shows a regular octahedron three-dimensional puzzle 300 related to one embodiment of the present invention.

Fig. 18 is a diagram which shows a regular dodecahedron three-dimensional puzzle 500 related to one embodiment of the present invention.

Fig. 19 is a diagram which shows a regular icosahedron three-dimensional puzzle 400 related to one embodiment of the present invention.

Fig. 20 (a) is a diagram which shows the appearance of the roof 501 which is reversed so as to fill the interior of the cube 200, Fig. 20 (b) is a diagram which shows a hexahedron 601 related to one embodiment of the present invention, Fig. 20 (c) shows a development of the hexahedron 601, Fig. 20 (d) is a diagram which shows the appearance when the interior of the cube 200 is filled with the two mirror image symmetrical hexahedrons 601 and 602.

Fig. 21 is a development of a piece 610 which is the shape of an atom ε related to one embodiment of the present invention.

Fig. 22 (a) is a view of the piece 110 which is the shape of the atom α again, Fig. 22 (b) is a diagram which shows the piece 110 divided into a tetrahedron 121 and a tetrahedron 123, Fig. 22 (c) is a diagram which shows a piece 151 which is the shape of an atom ξ and a piece 152 which is the shape of an atom ξ' related to one embodiment of the present invention, Fig. 22 (d) is a diagram which shows a quadrangular pyramid formed by gluing a tetrahedron 123 and a tetrahedron 124.

Fig. 23 is a development of the piece 151 which is the shape of the atom ξ related to one embodiment of the present invention.

Fig. 24 is a diagram which shows the appearance of an end of the piece 203 which is the shape of the atom γ which is divided into a piece 800 which is the shape of the atom θ and a piece 900 which is the shape of the atom η.

Fig. 25 is a development of the piece 800 which is the shape of the atom θ related to one embodiment of the present invention.

Fig. 26 is a development of the piece 900 which is the shape of the atom η related to one embodiment of the present invention.

Fig. 27 is a diagram which shows a piece 700 which is the shape of a polyhedron corresponding to two atoms α related to an embodiment of the present invention.

Fig. 28 is a diagram which shows a regular tetrahedron three-dimensional puzzle related to one embodiment of the present invention.

Figs. 29 (a) to (e) are diagrams of five types of Fedorov space-filling three-dimensional puzzles related to one embodiment of the present invention. Fig. 29 (a) shows a parallel hexahedron, Fig. 29 (b) shows a rhombic dodecahedron, Fig. 29 (c) shows a skewed hexagonal prism, Fig. 29 (d) shows an elongated rhombic dodecahedron, Fig. 29 (e) shows a truncated octahedron.

Figs. 30 (a) to (e) are exemplary diagrams which show the appearance where space is filled by stacking of translates of five types of Fedorov space-filling three-dimensional puzzles. Fig. 30 (a) shows the appearance of space filling by a parallel hexahedron, Fig. 30 (b) shows the appearance of space filling by a rhombic dodecahedron, Fig. 30 (c) shows the appearance of space filling by a skewed hexagonal prism, Fig. 30 (d) shows the appearance of space filling by a elongated rhombic dodecahedron, Fig. 30 (e) shows the appearance of space filling by a truncated octahedron.

Fig. 31 (a) is a diagram which shows a cube 1200, Fig. 31 (b) shows the cube divided into six congruent quadrangular pyramids 1201.

Fig. 32 (a) is a diagram which shows one of the quadrangular pyramids 1201 Fig. 32 (b) shows one of the quadrangular pyramids 1201 divided into right tetrahedrons 1203 by two perpendicular planes, Fig. 32 (c) is a diagram which shows a right tetrahedron 1203.

Fig. 33 (a) shows an exemplary view where the quadrangular pyramids 1201 are glued to each side of the cube 1200, Fig. 33 (b) is a diagram which shows a rhombic dodecahedron 1300.

Fig. 34 (a) shows a sphenoid 1100 in which two right tetrahedrons 1203 are glued to the bottom side of right angled isosceles triangles, Fig. 34 (b) shows a triangular prism 1401 in which three sphenoids 1100 are combined together, Fig. 34 (c) shows a skewed hexagonal prism 1400.

Fig. 35 (a) shows a rhombic dodecahedron 1300, Fig. 35 (b) is an exemplary diagram which shows the formation of an elongated rhombic dodecahedron 1500 by the rhombic dodecahedron 1300 and a helmet-shaped polyhedron 1501.

Fig. 36 (a) is a diagram which shows the sphenoid 1100 related to one embodiment of the present invention, Fig. 36 (b) shows the sphenoid 1100 divided into c-squadrons 1105.

Fig. 37 (a) is an enneahedron of a diamond 1601 in which four c-squadrons 1105 are combined together, Fig. 37 (b) is an exemplary diagram of a truncated octahedron (1600) formed by arranging six of the enneahedrons 1601.

Fig. 38 (a) is a diagram which shows a c-squadron 1105 related to one embodiment of the present invention, Fig. 38 (b) is an exemplary diagram which shows the c-squadron 1105 divided into σ 1101 and σ' 1103, Fig. 38 (c) is an exemplary diagram which shows the formation of a right tetrahedron 1203 using two each of σ 1101 and σ' 1103.

Fig. 39 is a development of σ 1101 and σ' 1103 related to one embodiment of the present invention.

Fig. 40 is an exemplary diagram which shows the formation of a hexahedron 1701 using σ 1101 and σ' 1103 related to one embodiment of the present invention.

Fig. 41 (a) is an upper side diagram which shows the formation of a polyhedron 1703 using three hexahedrons 1701, Fig. 41 (b) is a bottom side diagram of the polyhedron 1703.

Fig. 42 (a) is an exemplary diagram which shows the formation of a cube 1705 with an open hole using the polyhedron 1703, Fig. 42 (b) is a diagram which shows a combination of the cube 1705 with open hole and half of the truncated octahedron 1603, Fig. 42 (c) is a diagram which shows half of a cube formed by the cube 1705 with open hole and half of the truncated octahedron 1603, Fig. 42 (d) is a diagram which shows the cube 1700 which is formed.

Fig. 43 (a) is a diagram which shows half of a rhombic dodecahedron 1301, Fig. 43 (b) is a diagram which shows a helmet-shaped polyhedron 1501, Fig. 43 (c) is a diagram which shows a polyhedron 1503 cut away from the helmet-shaped polyhedron 1501, Fig. 43 (d) is a diagram which shows the formation of a skewed hexagonal prism 1420 from the polyhedron 1503 and half of the rhombic dodecahedron 1301, Fig. 43 (e) is a diagram which shows the skewed hexagonal prism 1420.

Fig. 44 shows an arrangement of a puzzle 1651 in which a truncated octahedron three-dimensional puzzle related to one embodiment of the present invention is halved, Fig. 44 (a) shows a side face view, Fig. 44 (b) shows a side face view, Fig. 44 (c) shows an upper face view, Fig. 44 (d) shows a bottom face view.

Fig. 45 shows an arrangement of a puzzle 1650 in which a truncated octahedron three-dimensional puzzle related to one embodiment of the present invention is halved, Fig. 45 (a) shows a side face view, Fig. 45 (b) shows a side face view, Fig. 45 (c) shows a bottom face view.

Fig. 46 is a diagram which shows an arrangement of a cube three-dimensional puzzle related to one embodiment of the present invention, Fig. 46 (a) shows a bottom face view of a puzzle 1651 in which a truncated octahedron three-dimensional puzzle is halved, Fig. 46 (b) shows a puzzle 1751 formed by cutting a cube with an open hole, Fig. 46 (c) shows half of a cube puzzle 1753 in which the puzzle 1651 which is half of a truncated octahedron three-dimensional puzzle, is glued to the puzzle 1751 formed by cutting a cube with an open hole, Fig. 46 (d) shows a cube three-dimensional puzzle 1750.

Fig. 47 is a diagram which shows an arrangement of a rhombic dodecahedron three-dimensional puzzle related to one embodiment of the present invention, Fig. 47 (a) shows half of a cube puzzle 1753, Fig. 47 (b) shows a puzzle 1353 where half of a cube is removed from a puzzle 1351 which is half of a rhombic dodecahedron, Fig. 47 (c) shows the puzzle 1351 which is half of a rhombic dodecahedron, Fig. 47 (d) shows a side face view of a rhombic dodecahedron puzzle 1350, Fig 47. (e) shows an upper side view of the rhombic dodecahedron puzzle 1350.

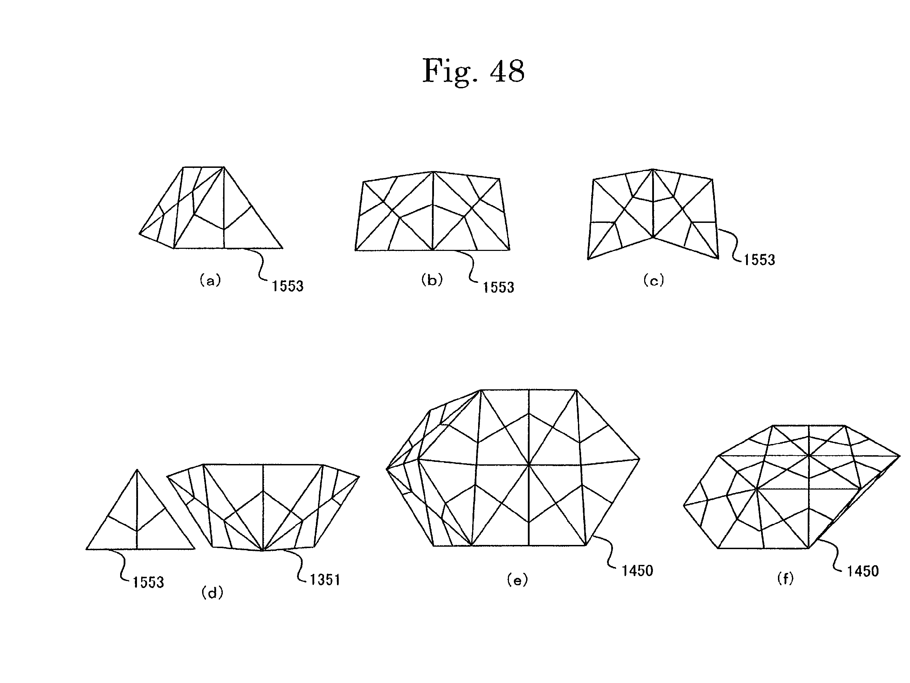

Fig. 48 is a diagram which shows an arrangement of a skewed hexagonal prism three-dimensional puzzle related to one embodiment of the present invention, Fig. 48 (a) shows a side face view of a puzzle 1553 which has been cut away from a helmet-shaped polyhedron puzzle 1551, Fig. 48 (b) shows a front face view of Fig. 48 (a), Fig. 48 (c) shows a back face view of Fig. 48 (a), Fig. 48 (d) shows an exemplary diagram of the formation of a skewed hexagonal prism puzzle 1450 by the puzzle 1553 which is cut away from the helmet-shaped polyhedron 1551, and the puzzle 1351 which is half of the rhombic dodecahedron 1350, Fig. 48 (e) shows an upper face view of the skewed hexagonal prism puzzle 1450, Fig. 48 (f) shows a side face view of the skewed hexagonal prism puzzle 1450.

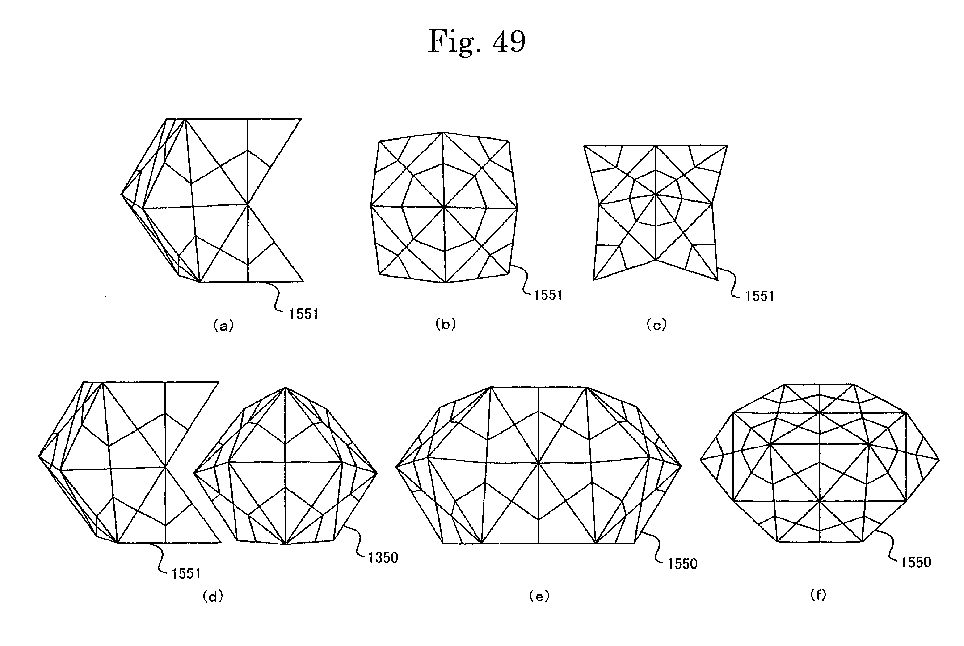

Fig. 49 is a diagram which shows an arrangement of an elongated rhombic dodecahedron three-dimensional puzzle related to one embodiment of the present invention, Fig. 49 (a) shows a side face view of the helmet-shaped polyhedron puzzle 1551, Fig. 49 (b) shows a front face view of the helmet-shaped polyhedron puzzle 1551, Fig. 49 (c) shows a back face view of the helmet-shaped polyhedron puzzle 1551, Fig. 49 (d) shows an exemplary diagram of the formation of an elongated rhombic dodecahedron puzzle 1550 by the helmet-shaped polyhedron puzzle 1551 and the rhombic dodecahedron puzzle 1350, Fig. 49 (e) shows an upper face view of the elongated rhombic dodecahedron puzzle 1550, Fig. 49 (f) shows a side face view of the elongated rhombic dodecahedron puzzle 1550.

EXLANATION OF THE REFERENCE SYMBOLS

100 regular tetrahedron
101 prism
103 pentahedron
110 atom $\alpha$
111 atom $\alpha$'
121 tetrahedron LJKW
123 tetrahedron LHKW
124 mirror image of tetrahedron 123
151 atom $\xi$
152 atom $\xi$
200 cube
201 regular triangular pyramid
203 golden tetra (atom $\gamma$)
204 atom $\gamma$'
205 polyhedron except golden tetra from regular triangular pyramid
207 equihepta
209 mirror image of equihepta
210 atom $\beta$
211 atom $\beta$'
300 regular octahedron
301 quadrangular pyramid
400 regular icosahedron
500 regular dodecahedron
501 roof
510 atom $\delta$
601 hexahedron
602 mirror image of hexahedron 601
610 atom $\varepsilon$
611 atom $\varepsilon$'
700 $\alpha 2$
701 quadrangular pyramid LHKWK'
800 atom $\theta$
801 atom $\theta$'
900 atom $\eta$
901 atom $\eta$'
1100 sphenoid
1101 $\sigma$
1103 $\sigma$'
1105 c-squadron
1200 cube
1201 quadrangular pyramid
1203 triangular pyramid (right tetrahedron)
1300 rhombic dodecahedron ,
1301 polyhedron which is a rhombic dodecahedron cut in half
1350 rhombic dodecahedron puzzle
1351 puzzle which is a rhombic dodecahedron cut in half
1353 a puzzle except half a cube from a puzzle which is a rhombic dodecahedron cut in half
1400 skewed hexagonal prism
1401 triangular prism
1403 mirror image symmetrical triangular prism
1420 skewed hexagonal prism
1450 skewed hexagonal prism puzzle
1500 elongated rhombic dodecahedron
1501 helmet-shaped polyhedron

1503 polyhedron cut away from helmet-shaped polyhedron 501

1505 skewed triangular prism

1507 mirror image of skewed triangular prism 505

1550 elongated rhombic dodecahedron puzzle

1551 helmet-shaped polyhedron puzzle

1553 puzzle cut away from helmet-shaped polyhedron puzzle 551

1600 truncated octahedron

1601 enneahedron (diamond)

1603 half of truncated octahedron

1650 truncated octahedron puzzle

1651 half of truncated octahedron puzzle

1700 cube

1701 hexahedron

1703 polyhedron

1705 cube with open hole

1707 polyhedron formed by cutting through cube with open hole

1709 polyhedron formed by cutting through half of cube

1750 cube puzzle

1751 puzzle formed by cutting through cube with open hole

1753 half of cube puzzle

EMBODIMENTS FOR REALIZING THE INVENTION

(FIRST EMBODIMENT)

When the interior of a regular polyhedron is filled perfectly by a plurality of convex polyhedrons, these convex polyhedrons can be called the component elements (here called "atoms") of a regular polyhedron. In other words, this means the regular polyhedron can be divided into several atoms. Only a regular tetrahedron, a cube, a regular octahedron, a regular icosahedron and a regular dodecahedron exist as a regular polyhedron.

However, there are limitless methods for dividing a regular polyhedron into several convex polyhedrons. That is, there are limitless atoms for forming a regular polyhedron.

Thus, the inventors of the present invention keenly examined which atoms should be adopted in order to be able to fill all the regular polyhedrons with their atoms while reducing the number of different atoms. As a result, a shape of the minimum number of atoms for filling all the regular polyhedrons was discovered. The circumstances in which the inventors of the present invention discovered a shape of the minimum number of atoms for filling all the regular polyhedrons is explained below.

First, a step which excludes a self-evident atom is explained. For example, a regular tetrahedron is examined as a polyhedron. Let the center of the regular tetrahedron be the peak, and four triangles on the surface of the regular tetrahedron as the bottom surface and the regular tetrahedron is divided into four congruent triangular pyramids. Because the bottom surface of this triangular pyramid is a regular triangle, this triangular pyramid has threefold rotation symmetry and mirror image symmetry and these are further divided into six congruent triangular pyramids. Here, when the mirror image symmetrical convex parts are defined as the same atom, it is possible to perfectly fill the interior of regular tetrahedron using 24 atoms of single type.

It is possible to apply the same division method as the division method of the regular tetrahedron stated above to a regular polyhedron. That is, a cube and regular octahedron are filled by 48 atoms and a regular dodecahedron and regular icosahedron are filled by 120 atoms. However, each of these atoms is obvious and effective in filling a specific regular polyhedron. However, when each of these atoms is diverted to an atom of another regular polyhedron, it instantly becomes an atom with bad efficiency.

The condition A below is attached in order to remove this obvious atom.

[Condition A]

It is possible to use any atom as at least two types of regular polyhedron.

Then, when an efficient atom is adopted for a specific polyhedron, it is necessary to create a method which can use this atom effectively in the filling of another regular polyhedron. Here, it is preferred that as many atoms as possible should be used to fill any one of the regular polyhedrons. However, a supplement is also required. This is because a cube is self-expanding, and when one filling method is discovered, it is possible to easily increase the number of atoms by $2^3$, $3^2$ etc simply by lining it up down, left right. Consequently, a cube is examined restricted to a basic filling method which does not use the self expanding properties. In this way, filling all of the regular polyhedrons using as many atoms of as few varieties as possible while satisfying [condition A] becomes a problem.

Furthermore, defining a mirror image symmetrical convex polyhedron as the same variety of atom,

(1) because a regular polyhedron has various symmetries it is predicted that a lot of mirror image symmetrical polyhedrons will be used, (2) because it is common sense to identify a pair of reverse diagrams in a tiling problem very similar to this filling problem

Five types of regular polyhedron are known, a regular tetrahedron, a regular hexahedron (cube), a regular octahedron, a regular dodecahedron and a regular icosahedron. In order to fill these regular polyhedrons with various atoms so as to satisfy [condition A], first, it is necessary to investigate the mutual relationships between the five types of regular polyhedron.

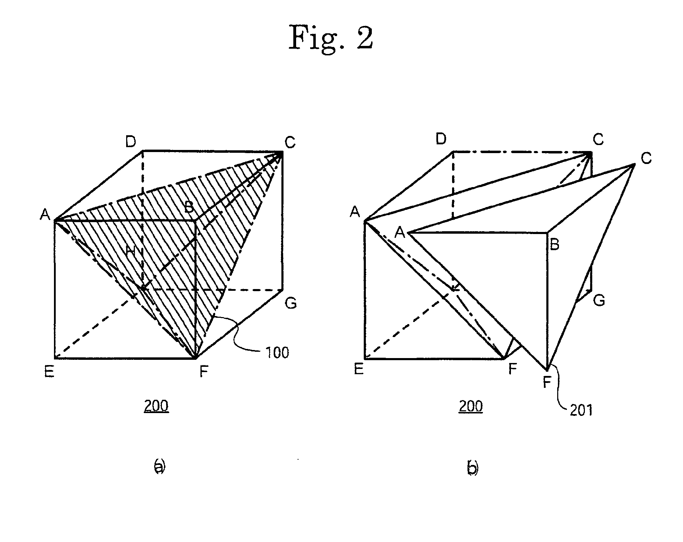

In the cube 200 as in Fig. 2(a), the upper face square is determined by ABCD and the bottom face square by EFGH, the cube is cut by a plane which passes through the three peaks A, C, F and a triangular pyramid 201 which includes the peak B is cut away as in Fig. 2(b). Because this cross section is a regular triangle, if a triangular pyramid which includes the peaks D, E, G is cut away by the same method, the remaining solid ACFH becomes a regular tetrahedron 100 as shown in Fig. 2 (a). The six dash lines in Fig. 2 (a) show the regular tetrahedron 100 obtained by this cutting away.

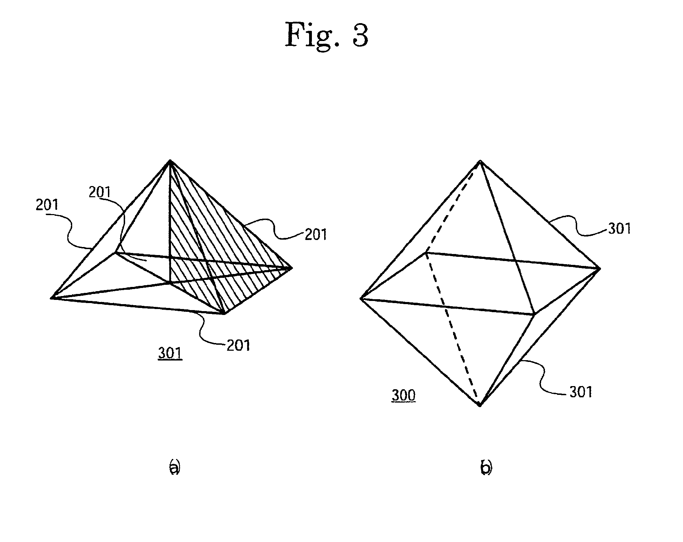

Next, as is shown in Fig. 2 (b), four triangular pyramids 201 which are cut away form a bottom surface of a regular triangle and a side face of a right isosceles triangle. The peaks B, C, D, E, G of these triangular pyramids 201 are gathered at one point, and when arranged so that the bottom face forms a square, a quadrangular prism 301 which has four side faces being all regular triangles is formed, shown in Fig. 3 (a). When the bottom face squares as shown in Fig. 3 (b) of two of these quadrangular prisms 301 are attached to each other (when a pair of bottom face squares are glued together) a regular octahedron 300 is formed. One relationship between the cube 200, the regular tetrahedron 100 and the regular octahedron 300 is obtained using this cutting method.

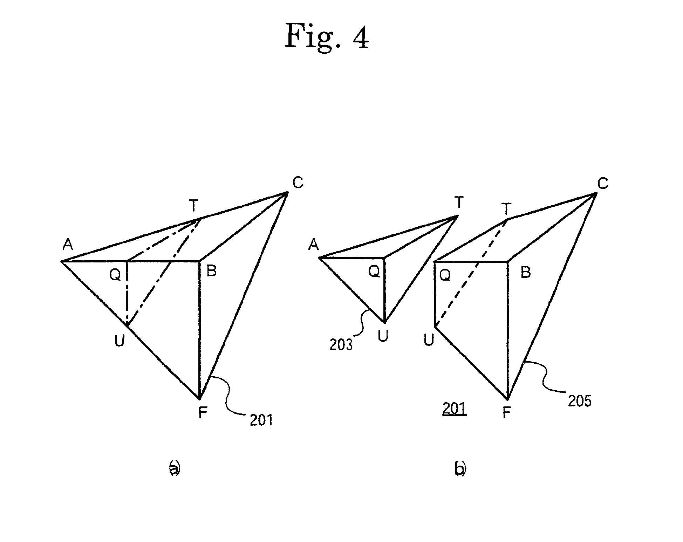

Next, focusing on the triangular pyramid 201 shown in Fig. 2 (b), as is shown in Fig. 4 (a) three points Q, T, U are each placed at proportions on three edges AB, AC, AF which satisfy the following formula:

[formula 1]

$$AQ : QB = AT : TC = AU : UF = 1 : \tau \cdots (1)$$

Here, $\tau$ is a golden proportion, and as is common knowledge can be obtained by the formula (2):

[formula 2]

$$\tau = \frac{\sqrt{5}+1}{2} \fallingdotseq 1.618033989 \quad \cdots (2)$$

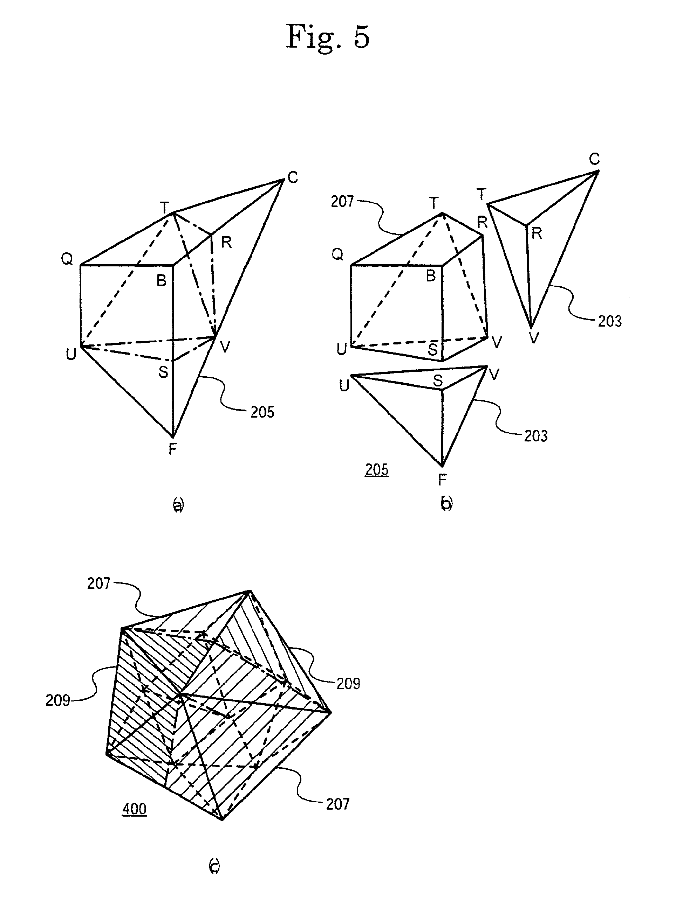

Then, as is shown in Fig. 4 (b) a triangular pyramid 203 including the peak A is cut away from the triangular pyramid 201. As is shown in Fig. 5 (a), (b), when the triangular pyramid 203 including the peaks C, F is also cut away, a heptahedron 207 is left in the center. Here, the three points R, S, V are each placed on the three edges CB, FB, FC at a proportion which satisfies the formula (3) below:

[formula 3]

$$CR : RB = FS : SB = FV : VC = 1 : \tau \quad \cdots (3)$$

When a heptahedron 207 is created in the center of Fig. 5 (b) using this method, the back face triangle TUV is a regular triangle and the three said face right triangles TQU, USV, VRT are congruent with the left hand side right triangle when the back face regular triangle TUV is divided in half left and right.

Next, the relationship established in the formula (4) below will be focused on.

[Formula 4]

$$QBS = RBQ = SBR = 90° \quad \cdots (4)$$

Four pairs of this heptahedron 207 and its mirror image symmetrical heptahedron 209 are created. By attaching (gluing) these together, a regular icosahedron 400 is formed as shown in Fig. 5 (c). As a result, one relationship is established between the triangular pyramid 201 and the regular icosahedron 400.

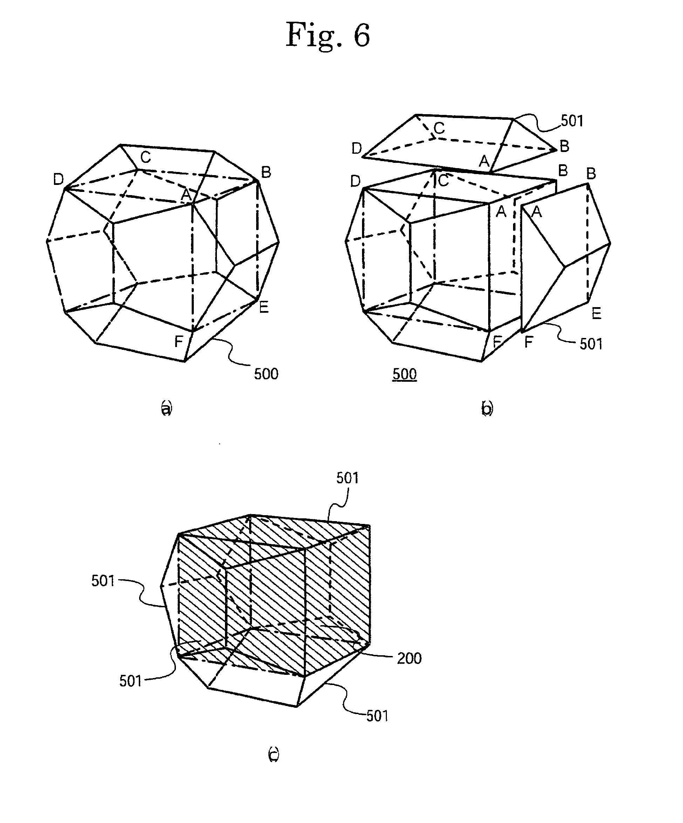

Next, a regular dodecahedron 500 is shown in Fig. 6 (a). As is shown in Fig. 6 (b), the upper part is cut away by a plane which passes through four peaks A, B, C, D, and the right part is cut away by a plane which passes through four peaks A, B, E, F. Then, two cross sections become congruent squares and the two cut away solids become congruent pentahedrons 501. As is shown by the dash line in Fig. 6 (c), when further four planes are cut away, a cube 200 is left at the center. One relationship between the regular dodecahedron and the cube is obtained.

The regular tetrahedron 100, regular octahedron 300 and regular icosahedron 400 are obtained from dividing the cube 200 as a result of the above stated examination. In addition, the cube 200 is obtained from dividing the regular dodecahedron 500. This dividing satisfies the condition [condition A].

Next, it is examined how it is possible to fill the entire regular polyhedron while satisfying condition [condition A] with as few types of atoms as possible. The case is considered where the regular tetrahedron 100 is formed from the dash line regular tetrahedron itself shown in Fig. 2 (a). Next, the cube 200 is formed by three types of convex polyhedron (five types if mirror images are included), namely one regular tetrahedron 100, two heptahedrons 207 and two mirror image symmetrical heptahedrons 208, and six tetrahedrons 203 and six mirror image symmetrical tetrahedrons. Next, the regular octahedron 300 is formed by two types of convex polyhedron (four types if mirror images are included), namely four heptahedrons 207 and four mirror image symmetrical heptahedrons 208, and twelve tetrahedrons 203 and twelve mirror image symmetrical tetrahedrons. Next, the regular dodecahedron as shown in Fig. 6 (b) is formed by four types of convex polyhedron (six type if mirror images are included), namely six pentahedrons 501, one regular tetrahedron 100, two heptahedrons 207 and two mirror image symmetrical heptahedrons 208, six tetrahedrons 203 and six mirror image symmetrical tetrahedrons. Lastly, a regular icosahedron is formed by one type of convex polyhedron consisting of four heptahedrons 207 and four mirror image symmetrical heptahedrons 208.

From the examination above, it is clear that any of four types of convex polyhedron (six types if mirror images are included) are used in forming a regular polyhedron, namely

[1] regular tetrahedron 100 (used for regular tetrahedron 100, cube 200 and regular dodecahedron 500),
[2] heptahedron (equihepta) 207 (and its mirror image 208) (used in cube 100, regular octahedron 300 and regular icosahedron 400),
[3] tetrahedron (golden tetra) 203 (and its mirror image 204) (used in cube 100 and regular octahedron 300), and
[4] pentahedron (roof) 501 (used in regular dodecahedron 500).

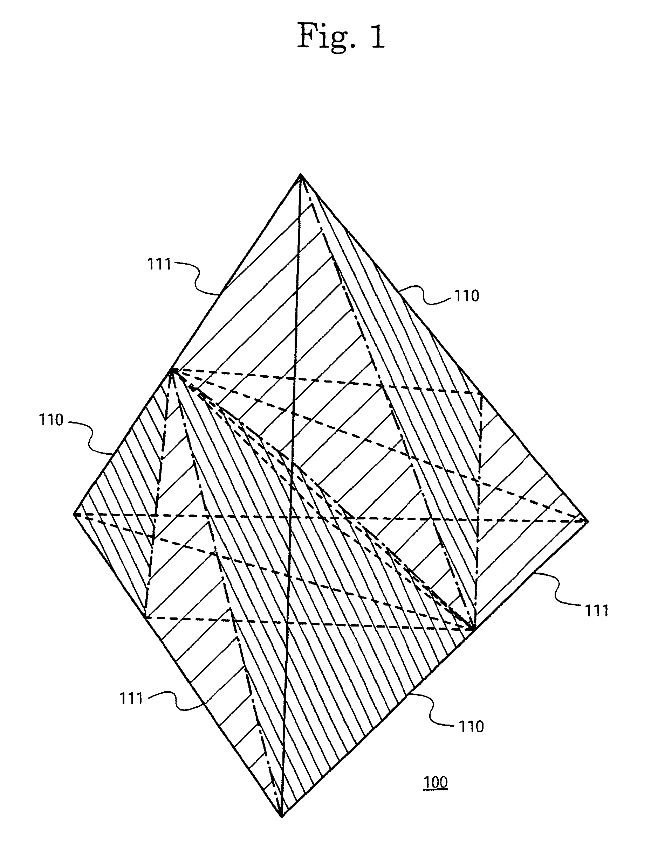

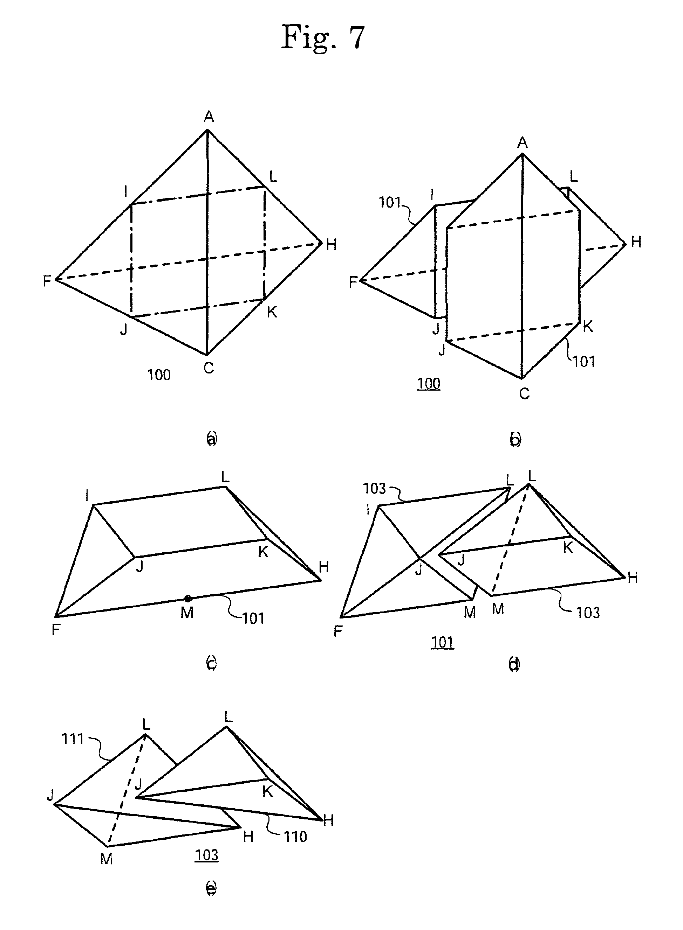

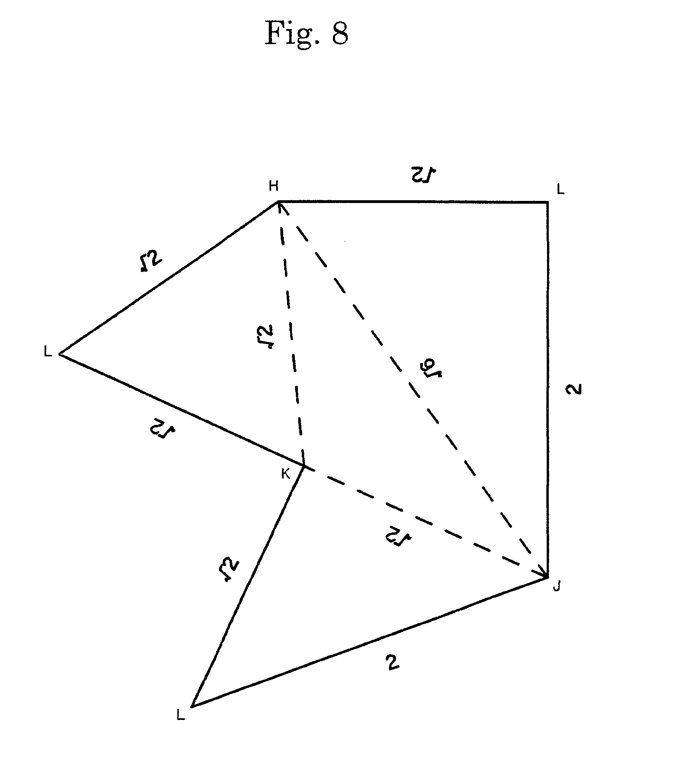

If the four types of convex polyhedron are each divided into several congruent convex polyhedrons, the number of atoms which form the regular polyhedron increases. Obvious dividing is removed and examined. First, in the regular tetrahedron 100 in [I], the regular tetrahedron 100 which is extracted from Fig. 2 (a) is shown again in Fig. 7 (a) and the regular tetrahedron 100 is cut by a plane which passes through the midpoints I, J, K, L on the four edges AF, FC, CH, HA. Then, as is shown in Fig. 7 (b), this cross section becomes a square (petri figure) and two solids which are divided become congruent prisms (triangular prisms) 101. Fig. 7 (c) shows a view from a different angle with one of the prisms 101 extracted. When the prism 101 is cut by a plane which passes through the three points J, L, M where M is at the center of the edge FH as shown in Fig. 7 (d), two congruent pentahedrons 103 are formed. Moreover, because each pentahedron 103 is symmetrical, when the left side pentahedron 103 is taken, it is possible to further divide the pentahedron into two congruent tetrahedrons 110 and 111 as is shown in Fig. 7 (e). Fig. 8 shows a development of the right side tetrahedron 110 (KJLH) and the dimensions are described as ratios. One atom which forms a regular polyhedron with the tetrahedron 110 as $\alpha$ is defined below. Then, as is shown in Fig. 1, because the regular tetrahedron 100 is formed by eight atoms, this can be written as $\alpha_8$, as in a molecular formula.

Here, as is shown in Fig. 7 (e) atom $\alpha$ is the tetrahedron (convex polyhedron) 110 with peaks KJLH, and its mirror image tetrahedron 111 with peaks MJLH. The atom $\alpha$ satisfies the conditions shown in formula (5) below.

[formula 5]

$$JL : LK : KL : LH : HL : LJ : JK : KH : JH=$$
$$2 : \sqrt{2} : \sqrt{2} : \sqrt{2} : \sqrt{2} : 2 : \sqrt{2} : \sqrt{2} : \sqrt{6} \quad \cdots (5)$$

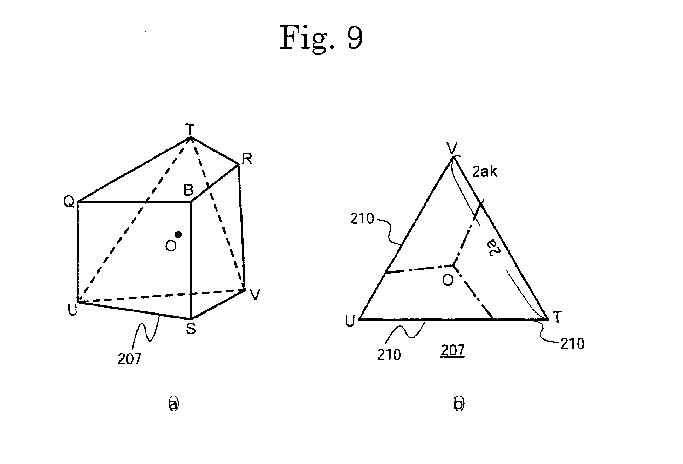

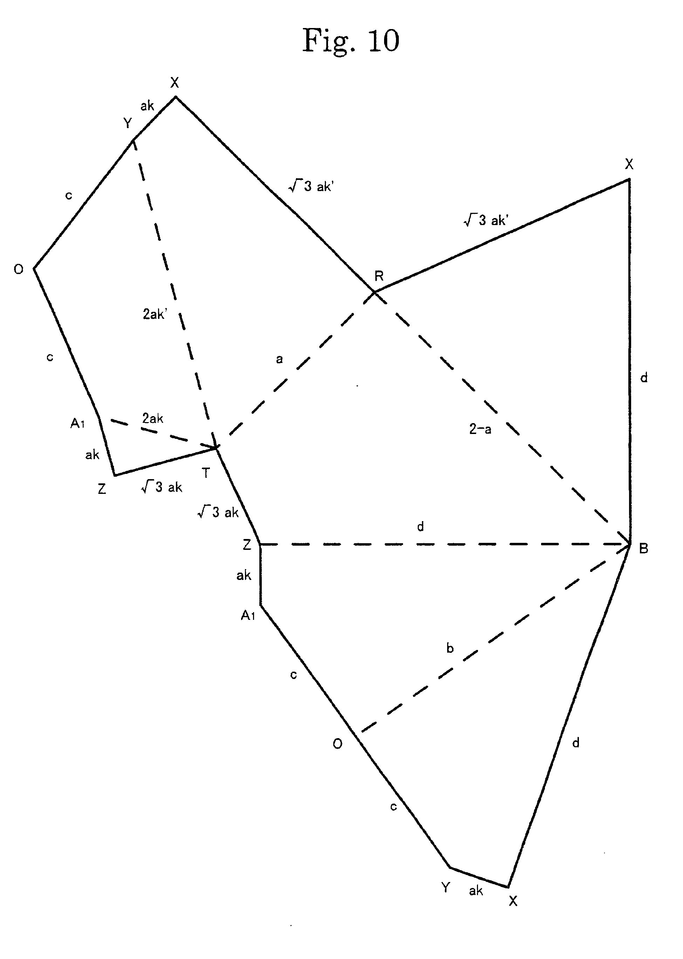

Next, when the equihepta 207 in [2] is examined, the equihepta 207 shown again in Fig. 9 (a) has three rotational symmetry when the regular triangle TUV is the bottom surface and the point B is the peak. As a result, when the center of the regular triangle is O, and the equihepta is cut in a perpendicular direction by three faces divided into 120° pieces through O, the equihepta is always divided into three congruent solids 210. This division is shown in Fig. 9 (b) and a development is shown in Fig. 10.

One atom which forms a regular polyhedron with the heptahedron 210 as $\beta$ is defined below. The atom $\beta$ 210, as shown in Fig. 10, is a heptahedron (convex polyhedron) having edges BX, XY, YO, $OA_1$, $A_1Z$, ZT, TZ, $ZA_1$, $A_1O$, OY, YX, XR, RX, XB, BO, BZ, BR, RT, TY and $TA_1$.

Here, a, k, k', b, c, d satisfy the following formulas (6) to (11)

(formula 6)
$$a = 3 - \sqrt{5} = 2 (2 - \tau) \cdots (6)$$

(formula 7)
$$k = 1 / (\tau + 2) = (5 - \sqrt{5}) / 10 \cdots (7)$$

(formula 8)
$$k' = 1 - k = (5 + \sqrt{5}) / 10 \quad \cdots (8)$$

(formula 9)
$$b = 2 / \sqrt{3} \dots (9)$$

(formula 10)
$$C = (2 / \tau^2) \sqrt{(\tau^2 - 2k' + 3k'^2)} \cdots (10)$$

(formula 11)

$$d = (2 / \tau^2) \sqrt{(4 / 3 - 4k' + 4k'^2)} \cdots (11)$$

At this time, atom $\beta$ 210 satisfies the conditions shown in formula (12) below.
(formula 12)

$$BX : XY : YO : OA_1 : A_1Z : ZT : TZ : ZA_1 :$$
$$A_1O : OY : YX : XR : RX : XB : BO : BZ : BR :$$
$$RT : TY : TA_1 =$$
$$d : ak : c : c : ak : \sqrt{3} \cdot ak : \sqrt{3} \cdot ak :$$
$$ak : c : c : ak : \sqrt{3} \cdot ak' : \sqrt{3} \cdot ak' : d :$$
$$b : d : 2 - a : a : 2ak' : 2ak \quad \cdots (12)$$

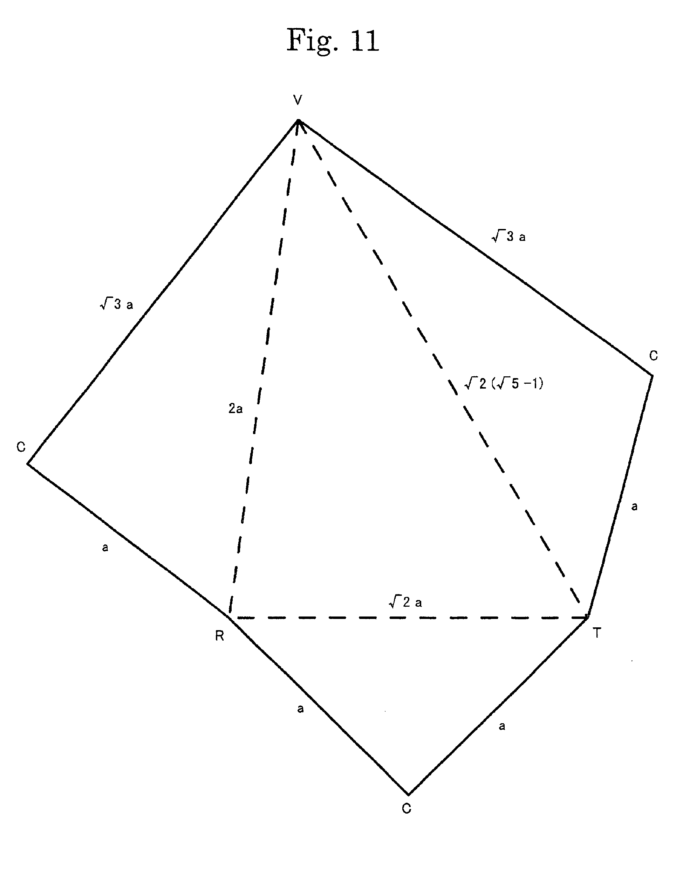

Because a regular icosahedron is formed by twenty-four atoms $\beta$ 210, it is possible to describe this as $\beta_{24}$.
Next, when the golden tetra 203 in [3] is examined, it is impossible to divide the golden tetra 203 into a plurality of congruent convex polyhedrons. Thus, one atom which forms a regular polyhedron with the golden tetra 203 as $\gamma$ is defined. Fig. 11 is a development of the atom $\gamma$ 203 and dimensions are shown according to ratios. The atom $\gamma$, as is shown in Fig. 11, is a tetrahedron (convex polyhedron) having edges CR, RC, CV, VC, CT, TC, RT, RV and VT. The atom $\gamma$ satisfies the formula (13) below.

(formula 13)

$$CR : RC : CV : VC : CT : TC : RT : RV : VT =$$
$$a : a : \sqrt{3}a : \sqrt{3}a : a : a : \sqrt{2}a : 2a :$$
$$\sqrt{2} (\sqrt{5} - 1) \cdots (13)$$

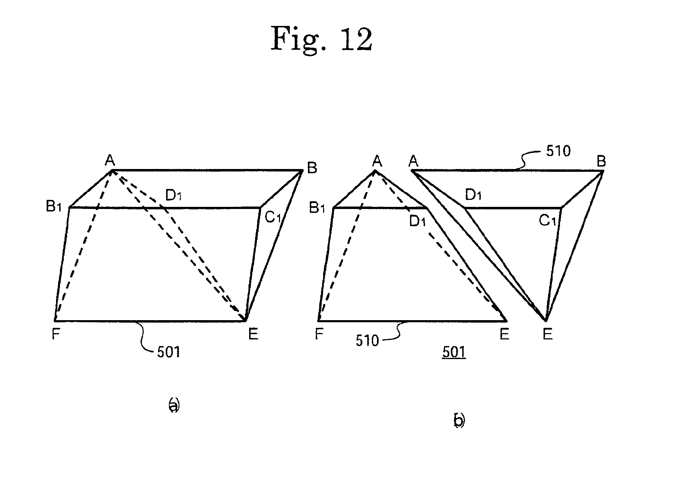

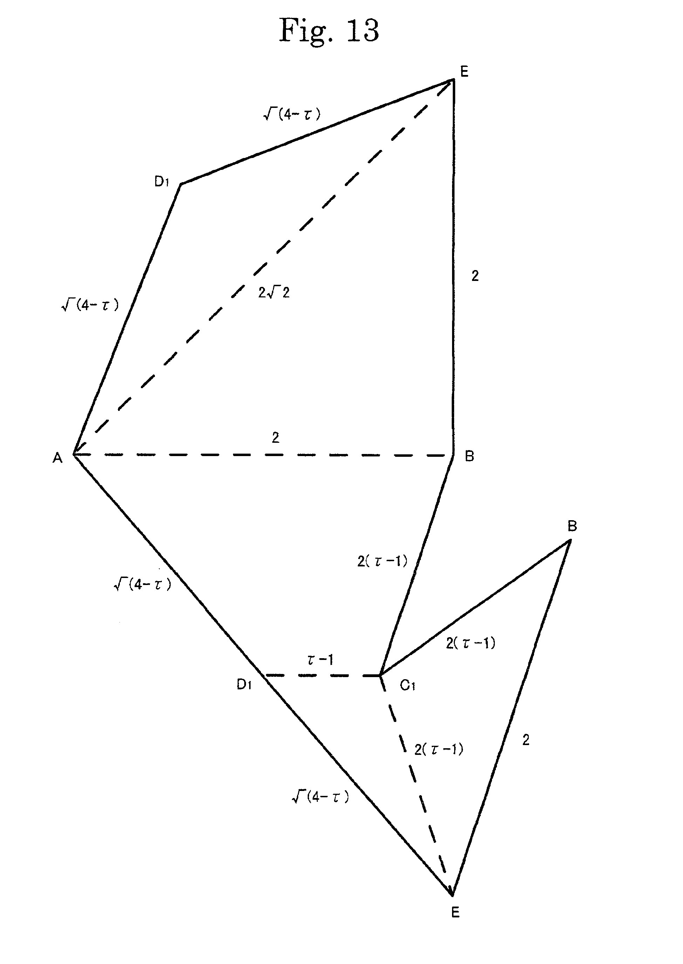

Then, because a regular octahedron is formed by twenty-four $\beta$ and $\gamma$, it is possible to describe this as $\beta_{24}\gamma_{24}$. In addition, because a cube in Fig. 1 (a) is formed by eight $\alpha$, twelve $\beta$ and twelve $\gamma$, it is possible to describe this as $\alpha_8\beta_{12}\gamma_{12}$.
Next, when the roof 501 in [4] is examined, while considering that the roof 501 has up down left and right symmetry, it is divided into two congruent pentahedrons 501 as is shown in Fig. 12 (a). One atom which forms a regular polyhedron with the pentahedron 510 as $\delta$ is defined. Fig. 13 is a development of the atom $\delta$ 510 and dimensions are shown according to ratios. The atom $\delta$ 510, as is shown in Fig. 13, is a tetrahedron (convex polyhedron) having edges BE, $ED_1$, $D_1A$, $AD_1$, $D_1E$, EB, $BC_1$, $C_1E$, $C_1D_1$, BA and AE. The atom $\delta$ 510 satisfies the formula (14) below.

(formula 14)

$$BE : ED_1 : D_1A : AD_1 : D_1E : EB : BC_1 : C_1B :$$
$$C_1E : C_1D : BA : AE =$$
$$2 : \sqrt{(4-\tau)} : \sqrt{(4-\tau)} : \sqrt{(4-\tau)} :$$
$$\sqrt{(4-\tau)} : 2 : 2(\tau-1) : 2(\tau-1) : 2(\tau-1) :$$
$$\tau-1 : 2 : 2\sqrt{2} \quad \cdots (14)$$

A solution for forming a regular polyhedron by a minimum number of atoms $\alpha$, $\beta$, $\gamma$ and $\delta$ is obtained as described above. The number of each regular polyhedron using the atoms $\alpha$, $\beta$, $\gamma$, $\delta$ can be expressed as:

Regular tetrahedron $\cdots\cdots\cdots$ $\alpha_8$

Cube $\cdots\cdots\cdots\cdots\cdots\cdots$ $\alpha_8\beta_{12}\gamma_{12}$

Regular octahedron $\cdots\cdots\cdots$ $\beta_{24}\gamma_{24}$

Regular dodecahedron $\cdots\cdots\cdots$ $\alpha_8\beta_{12}\gamma_{12}\delta_{12}$

Regular icosahedron $\cdots\cdots\cdots$ $\beta_{24}$

However, a mirror image symmetrical atom is also shown by $\alpha$, $\beta$, $\gamma$, $\delta$. If a prime symbol (') is attached to distinguish a mirror image symmetrical atom, then they can be expressed as:

Regular tetrahedron $\cdots\cdots\cdots$ $\alpha_4\alpha'_4$

Cube $\cdots\cdots\cdots\cdots\cdots\cdots$ $\alpha_4\alpha'_4\beta_6\beta'_6\gamma_6\gamma'_6$

Regular octahedron $\cdots\cdots\cdots$ $\beta_{12}\beta'_{12}\gamma_{12}\gamma'_{12}$

Regular dodecahedron $\cdots\cdots$ $\alpha_4\alpha'_4\beta_6\beta'_6\gamma_6\tau'_\gamma\delta_{12}$

Regular icosahedrons $\cdots\cdots$ $\beta_{12}\beta'_{12}$

From the above, it was discovered that the minimum number of atoms for forming a regular polyhedron is four types $\alpha$, $\beta$, $\gamma$, $\delta$.

Here, it is clear that the minimum number of atoms for forming a regular polyhedron can be expressed as theorem 1 under the definitions (1) - (4) below.

(1) polyhedrons P and Q are "congruent" means either that P and Q are identical or that P and Q have a mirror image relationship.

(2) a polyhedron is "indecomposable" means that P is indivisible into two or more congruent polyhedrons.

(3) Let $\Pi$ be a group of polyhedrons $P_1$, $P_2$, $\cdots$ $P_n$.

i.e $\Pi = \{P_1, P_2, \ldots P_n\}$

Let E be a group of indecomposable polyhedrons $e_1, e_2, \cdots e_m$,
i.e $E = \{e_1, e_2, \cdots e_m\}$, $\forall e_1$ is indecomposable, e; and $e_j$ are non-congruent (i≠j) At this time, E is a group E (Π) of the element (atom) of Π means satisfying formula (15) below.

$$(\mathrm{formula}\ 15)$$

$$(\forall_i < 1 \leq i \leq n),\ a_i\ \mathrm{is\ a\ nonnegative\ integer.}\ \cdots (15)$$

That is, whichever polyhedron $P_i$ belongs to Π, it is possible to divide into an indecomposable polyhedron belonging to E. (4) The element number (atom number) e (Π) of Π means the minimum number of an order among various element groups with respect to Π.
That is

$$e\ (\Pi) = \min \left| \ E\ (\Pi)\ \right|$$

$$(\mathrm{Theorem}\ 1)$$

$$\mathrm{Let}\ \Pi_1 = \{\mathrm{regular\ polyhedron\ group}\}$$

$$e\ (\Pi_1) \leq 4,\ e\ (\Pi_1) = \{\alpha, \beta, \gamma, \delta\}$$

Here, a three-dimensional puzzle of the present invention related to the present embodiment which uses the minimum number of atoms α, β, γ, δ for forming all the regular polyhedrons will be explained in detail. The three-dimensional puzzle of the present invention related to the present embodiment creates a regular polyhedron using the minimum number of atoms α, β, γ, δ, and has the excellent effects of being able to visually explain the above stated theorem 1. Consequently, the three-dimensional puzzle of the present invention related to the present embodiment is excellent as an educational material for explaining the above stated theorem 1.

(Regular tetrahedron three-dimensional puzzle)

Fig. 1 is referenced. Fig. 1 is a three-dimensional puzzle of the present invention related to the present embodiment and shows a regular tetrahedron three-dimensional puzzle 100. As is shown in Fig. 1, the three-dimensional puzzle (regular tetrahedron three-dimensional puzzle 100) can be formed by four pieces which have the shape of atom α 110 and four pieces which have a shape of a mirror image α' 111 of atom α 110 as explained in detail above. Furthermore, the regular tetrahedron three-dimensional puzzle 100 of the present invention related to the present embodiment is one example and there are also examples where the arrangement of the atom α 110 and the atom α' 111 can be changed while maintaining the relative positional relationship between them.

(Cube three-dimensional puzzle)

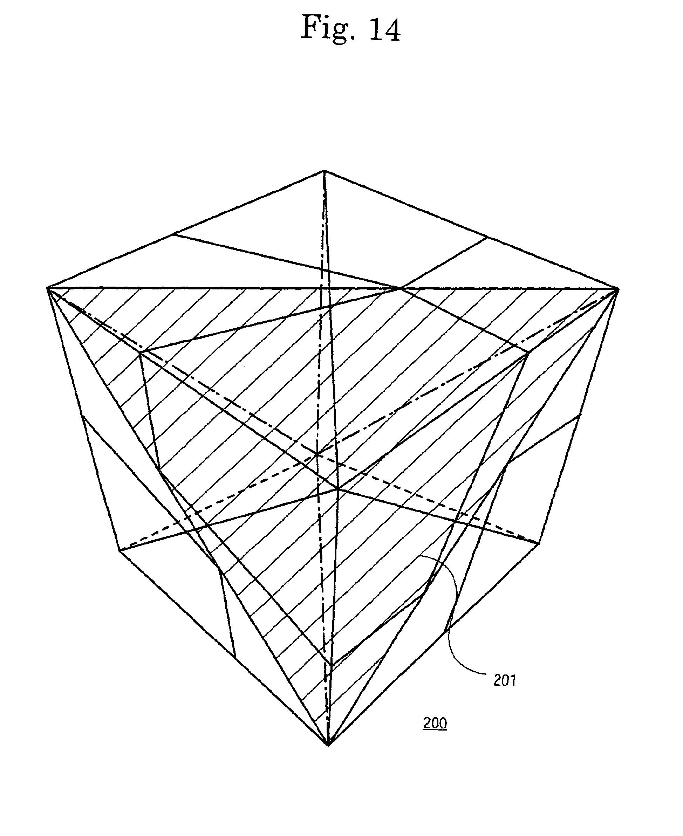

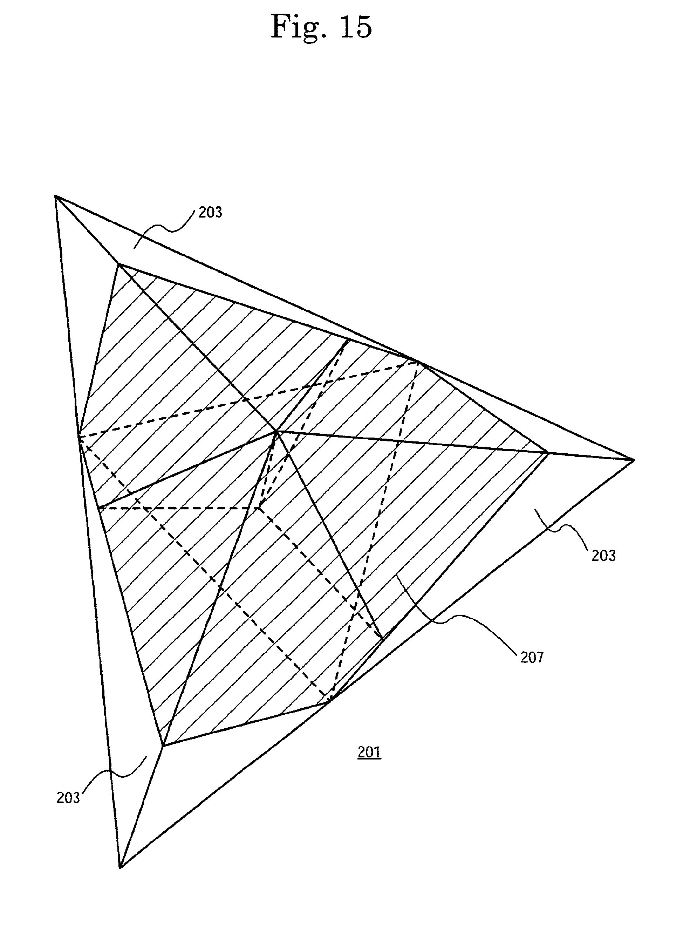

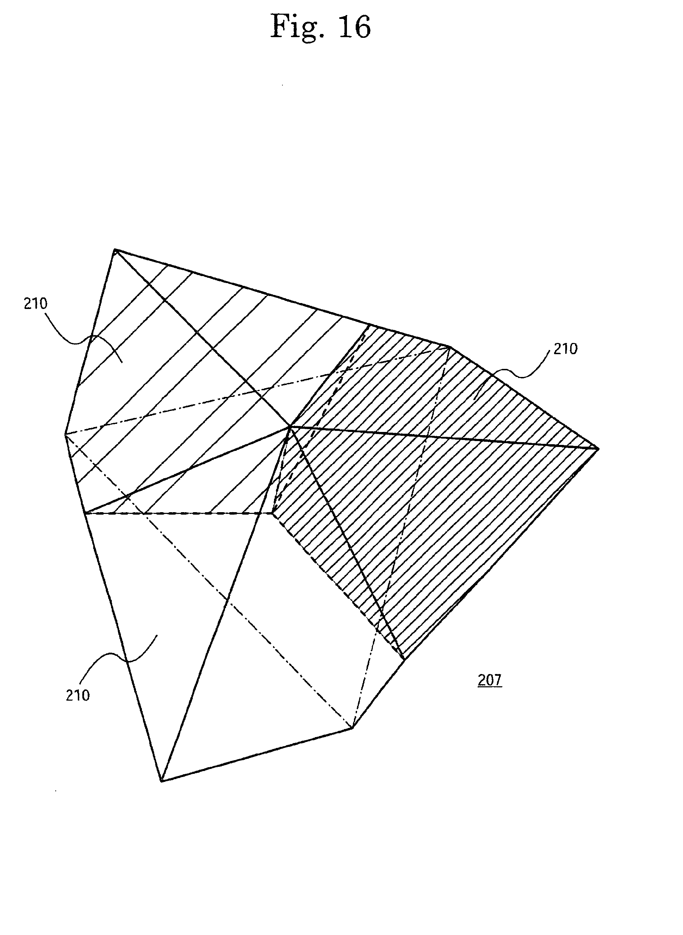

Fig. 14 is referenced. Fig. 14 is a three-dimensional puzzle of the present invention related to the present embodiment and shows a cube three-dimensional puzzle 200. The cube includes the regular tetrahedron 100 which is comprised of the atom α (and α') as explained in detail above, and is formed by gluing a triangular pyramid 201 which has side faces which are right isosceles triangles to each of the four faces of the cube. In addition, as is shown in Fig. 15, the triangular pyramid 201 is a part arranged with three pieces 203 which has the shape of the atom γ with parts 207 (Fig. 16) comprised of three pieces 210 which have the shape of atom β at the center. Therefore, the three-dimensional puzzle of the present invention related to the present embodiment (cube puzzle 200) can be formed by using four pieces 110 which have the shape of atom α and four pieces 111 which have the shape of the atom α mirror image atom α', six pieces 210 which have the shape of atom β and six pieces 211 which have the shape of the atoms β mirror image atom β', and six pieces 203 which have the shape of atom γ and six pieces 204 which have the shape of the atom γ mirror image atom γ'. Furthermore, the cube three-dimensional puzzle 200 of the present invention related to the present embodiment is one example and there are also examples where the arrangement of the atoms α and α', β and β', and γ and γ' can be changed while maintaining the relative positional relationship between them.

(Regular octahedron three-dimensional puzzle)

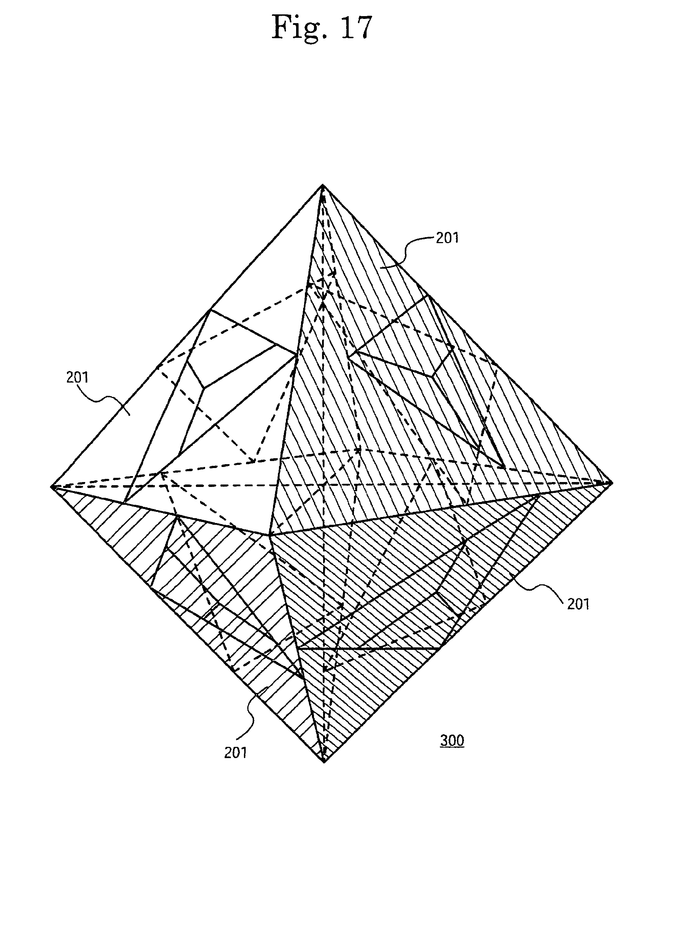

Fig. 17 is referenced. Fig. 14 is a three-dimensional puzzle of the present invention related to the present embodiment and shows a regular octahedron three-dimensional puzzle 300. The regular octahedron three-dimensional puzzle 300 is formed by gluing eight regular three sided pyramids 201 which have sides which are right isosceles triangles. Therefore, the three-dimensional puzzle of the present invention related to the present embodiment (regular octahedron puzzle 300) can be formed by using twelve pieces 210 which have the shape of atom β and twelve pieces 211 which have the shape of the atom β mirror image atom β', and twelve pieces 203 which have the shape of atom γ and twelve pieces 204 which have the shape of the atom γ mirror image atom γ'. Furthermore, the regular octahedron three-dimensional puzzle 300 of the present invention related to the present embodiment is one example and there are also examples where the arrangement of the atoms β and β', and γ and γ' can be changed while maintaining the relative positional relationship between them.

(Regular dodecahedron three-dimensional puzzle)

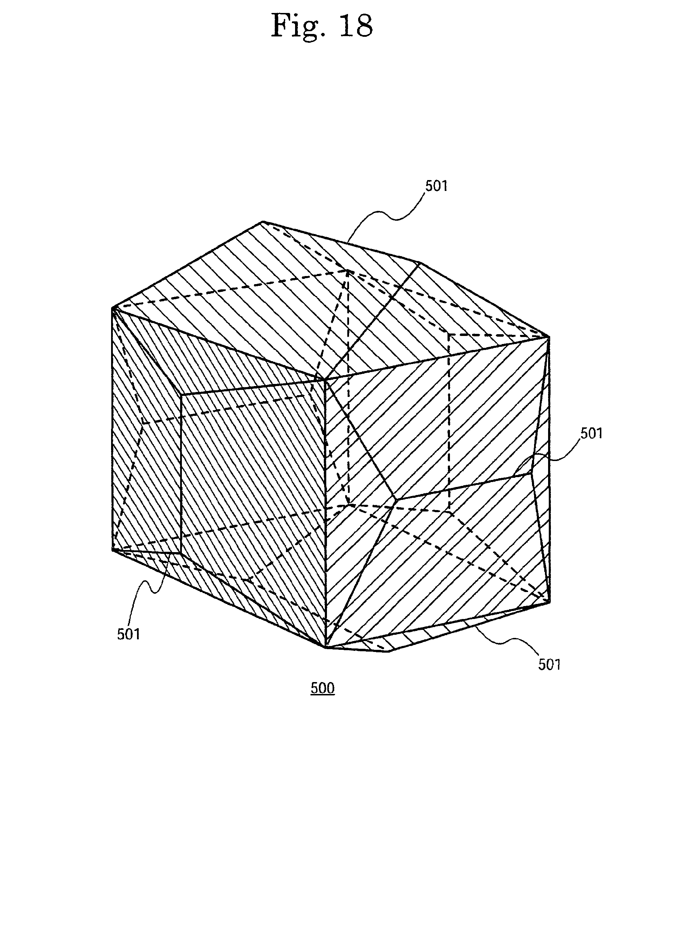

Fig. 18 is referenced. Fig. 18 is a three-dimensional puzzle of the present invention related to the present embodiment and shows a regular dodecahedron three-dimensional puzzle 500. The regular dodecahedron three-dimensional puzzle 500 includes the cube 200 at the center as shown in Fig. 6 (c), and is formed by arranging roof parts 501 comprised of two pieces 510 which have a shape of the atom δ on six sides of cubes 200. Therefore, the three-dimensional puzzle of the present invention related to the present embodiment (regular dodecahedron puzzle 500) can be formed by using four pieces 110 which have the shape of atom α and four pieces 111 which have the shape of the atom α mirror image atom α', six pieces 210 which have the shape of atom β and six pieces 21 which have the shape of the atoms β mirror image atom β', six pieces 203 which have the shape of atom γ and six pieces 204 which have the shape of the atom γ mirror image atom γ', and twelve pieces 510 which have the shape of the atom δ. Furthermore, the regular dodecahedron three-dimensional puzzle 500 of the present invention related to the present embodiment shown in Fig. 18 is one example and there are also examples where the arrangement of the atoms α 110 and α' 111, β 210 and β 211', γ 203 and γ' 203, can be changed while maintaining the relative positional relationship between them.

(Regular icosahedron three-dimensional puzzle)

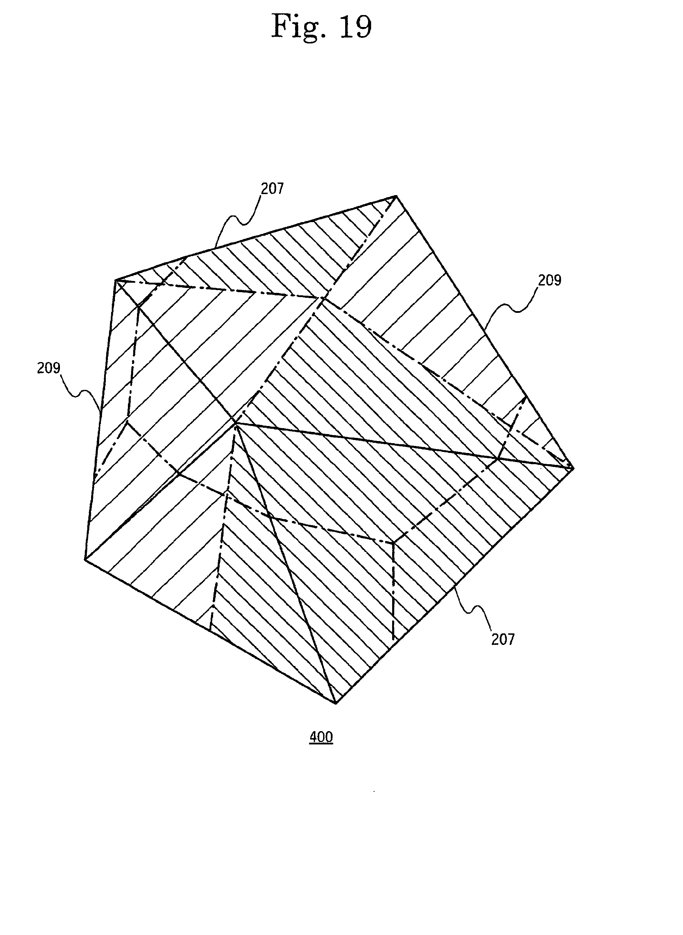

Fig. 19 is referenced. Fig. 19 is a three-dimensional puzzle of the present invention related to the present embodiment and shows a regular icosahedron three-dimensional puzzle 400. Four pairs of parts 207 which have the shape of an equihepta comprised from three pieces 210 which have the shape of the atom β shown in Fig. 16, and the parts 209 which have the equihepta mirror image symmetrical shape are glued together to form the regular icosahedron. Therefore, the three-dimensional puzzle of the present invention related to the present embodiment (regular icosahedron puzzle 400) can be formed by using twelve pieces 210 which have the shape of atom β and twelve pieces 211 which have the shape of the atoms β mirror image atom β'. Furthermore, the regular icosahedron three-dimensional puzzle 400 of the present invention related to the present embodiment shown in Fig. 19 is one example and there are also examples where the arrangement of the atoms β 210 and β' 211, can be changed while maintaining the relative positional relationship between them.

As explained above, because the three-dimensional puzzle of the present invention related to the present embodiment can be formed by a minimum number of atoms (convex polyhedrons) which fill all the regular polyhedrons, the present invention demonstrated excellent effects of being able to form all the regular polyhedrons (regular tetrahedron, cube, regular octahedron, regular dodecahedron, regular icosahedron) even with few parts. In addition, it is possible to visually prove the theorem discovered by the inventors and the present invention can also be used as an excellent educational material for explaining the above stated theorem 1.

(Second Embodiment)

In the second embodiment, an example of a three-dimensional puzzle which can form a cube and a regular dodecahedron without using the atom α of embodiment one is explained.

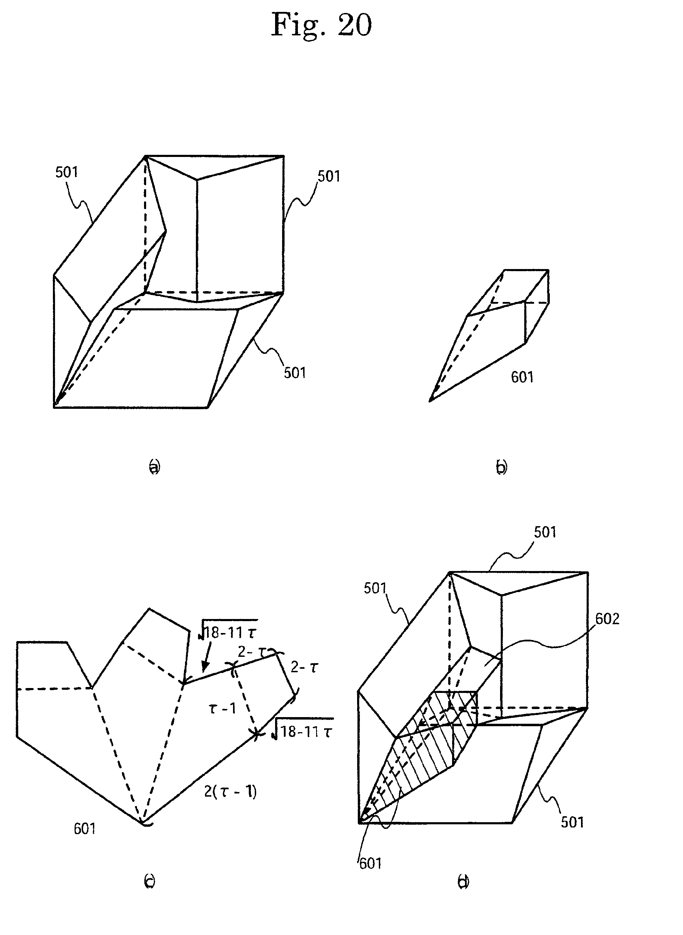

Fig. 20 is referenced. Fig. 20 (a) shows the appearance when six roofs 501 ($\delta^2$) comprised from two atoms δ 510 are reversed so as to fill the interior of a cube 200. In Fig. 20 (a) only the roof 501 of the back face, side face and bottom face is shown to facilitate visualization. Each face of the pentahedron 501 ($\delta_2$) which is reversed overlaps so that no gaps exist as is clear from the dihedral angle of each face. However, a long thin gap is produced in the eight corners of the cube and four mirror image symmetrical hexahedrons 601 and four hexahedrons 602 are required to fill these gaps. Fig. 20 (b) shows a hexahedron 601 for filling the forefront left side lower gap in Fig. 20 (a), and Fig. 20 (c) shows a development of this. In addition, Fig. 20 (d) shows the appearance when two lower left gaps of two of the mirror image symmetrical hexahedrons 601 and 602 are filled. In this way, a relationship between a regular dodecahedron 500 and cube 200 is obtained which is different to the relationship in the first embodiment.

A cube which is different to the cube explained in the first embodiment is comprised of two types of convex polyhedron, namely, six roofs 501 ($\delta_2$), four hexahedrons 601 and four mirror image symmetrical hexahedrons 602. In addition, the regular dodecahedron 500 is comprised of two types of convex polyhedron, namely, twelve roofs 501 ($\delta_2$), four hexahedrons 601 and four mirror image symmetrical hexahedrons 602.

From the above investigation it is clear that the five types of convex polyhedrons are used in the structure of any two or more regular polyhedrons:

[1] regular tetrahedron 100 (used in a regular tetrahedron 100 and cube 200).
[2] equihepta 207 and its mirror image 209 (used in a cube 100, regular octahedron 300 and regular icosahedron 500).
[3] golden tetra 203 and its mirror image 204 (used in a cube 200 and regular octahedron 300).
[4] roof 501 (used in a regular dodecahedron 500).
[5] hexahedron 601 and its mirror image 602 (used in a cube 200 and regular dodecahedron 500).

Here, because the convex polyhedrons [1] to [4] were explained in the first embodiment, an explanation is omitted here.

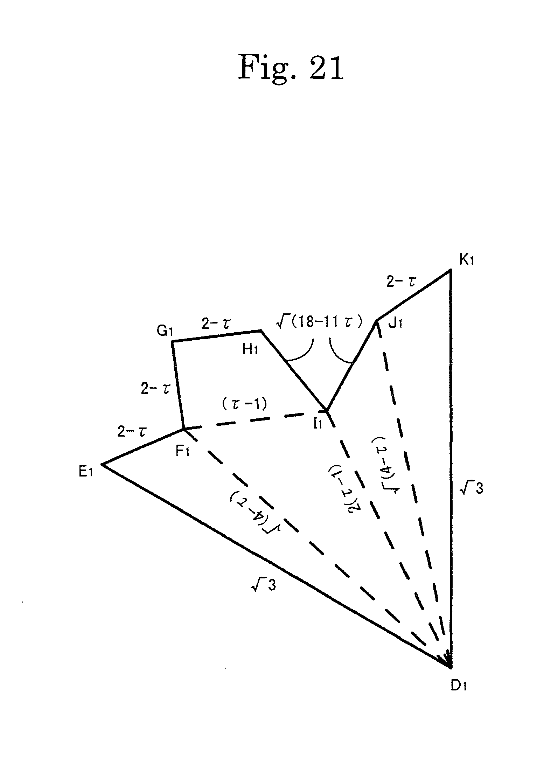

When the hexahedron 601 in [5] is examined, it has three rotational symmetry as is clear from the hexahedron in Fig. 20 (b) and is the development in Fig. 20 (c). As a result, by cutting in a perpendicular direction by three faces of 120° each, the hexahedron is divided into three congruent polyhedrons. A development of three congruent quadrangular pyramids 610 which have been cut along the edges of the hexahedron 601 is shown in Fig. 21. Furthermore, dimensions are described using ratios in the development. A quadrangular pyramid 610 shown in Fig. 21 is defined as atom $\varepsilon$.

Atom $\varepsilon$ 610 is a pentahedron (convex polyhedron) which has edges $D_1E_1$, $E_1F_1$, $F_1G_1$, $G_1H_1$, $H_1I_1$, $I_1J_1$, $J_1K_1$, $K_1D_1$, $D_1F_1$, $D_1I_1$, $D_1J_1$, and $F_1I_1$. Atom $\varepsilon$ satisfies the following formula (16)

$$(\text{formula sixteen})$$

$$D_1E_1 : E_1F_1 : F_1G_1 : G_1H_1 : H_1I_1 : I_1J_1 :$$

$$J_1K_1 : K_1D_1 : D_1F_1 : D_1I_1 : D_1J_1 : F_1I_1 =$$

$$\sqrt{3} : 2 - \tau : 2 - \tau : 2 - \tau : \sqrt{(18 - 11\tau)} :$$

$$\sqrt{(18 - 11\tau)} : 2 - \tau : \sqrt{3} : \sqrt{(4 - \tau)} : 2(\tau - 1) :$$

$$\sqrt{(4 - \tau)} : \tau - 1 \cdots (16)$$

Because the cube 200 is comprised of twelve atoms $\delta$ 510 and twenty-four atoms $\varepsilon$ (twelve atoms $\varepsilon$ and twelve mirror image atoms $\varepsilon$'), it is expressed as $\delta_{12}\varepsilon_{24}$ ($\delta_{12}\varepsilon_{12}\varepsilon'_{12}$) and because the regular dodecahedron 500 is comprised of twenty-four $\delta$ and twenty-four $\varepsilon$, it is expressed as $\delta_{24}\varepsilon_{24}$ ($\delta_{24}\varepsilon_{12}\varepsilon'_{12}$).

By using the atoms $\alpha$, $\beta$, $\gamma$, $\delta$, $\varepsilon$, each individual regular polyhedron becomes:

| Regular tetrahedron | $\alpha_8$ |
|---|---|
| Cube | $\alpha_8\beta_{12}\gamma_{12}$, $\delta_{12}\varepsilon_{24}$ |
| Regular octahedron | $\beta_{24}\gamma_{24}$ |
| Regular dodecahedron | $\beta_{24}\varepsilon_{24}$ |

However, the same symbols $\alpha$, $\beta$, $\gamma$, $\delta$, $\varepsilon$, also indicate mirror image symmetrical atoms. If the mirror image symmetrical atoms are attached with a prime symbol (') then:

| Regular tetrahedron | $\alpha_4\alpha'_4$ |
|---|---|

(continued)

| Cube | $\alpha_4\alpha'_4\beta_6\beta'_6\gamma_6\gamma'_6,\ \delta_{12}\epsilon_{12}\epsilon'_{12}$ |
| Regular octahedron | $\beta_{12}\beta'_{12}\gamma_{12}\gamma'_{12}$ |
| Regular dodecahedron | $\delta_{24}\epsilon_{12}\epsilon'_{12}$ |
| Regular icosahedron | $\beta_{12}\beta'_{12}$ |

In the three-dimensional puzzle of the present invention related to the present embodiment, it is possible to form a cube and a regular dodecahedron without using atom $\alpha$ by using $\epsilon$ in addition to the minimum number of atoms $\alpha$, $\beta$, $\gamma$, $\delta$ which form all the regular polyhedrons. Consequently, the three-dimensional puzzle of the present invention related to the present embodiment is created from regular polyhedrons using the atom $\epsilon$ in addition to the minimum number of atoms $\alpha$, $\beta$, $\gamma$, $\delta$, it is possible to visually explain the above stated theorem 1 and demonstrate excellent effects which can compare both by a transformation example using $\epsilon$ which is the fifth atom. Therefore, the three-dimensional of the present invention related to the present embodiment is also excellent as an educational material.

(Third Embodiment)

In the present embodiment, an example of a three-dimensional puzzle which can form a regular tetrahedron 100, cube 200 and regular octahedron 300 without using the atom $\alpha$ of the first embodiment is explained.

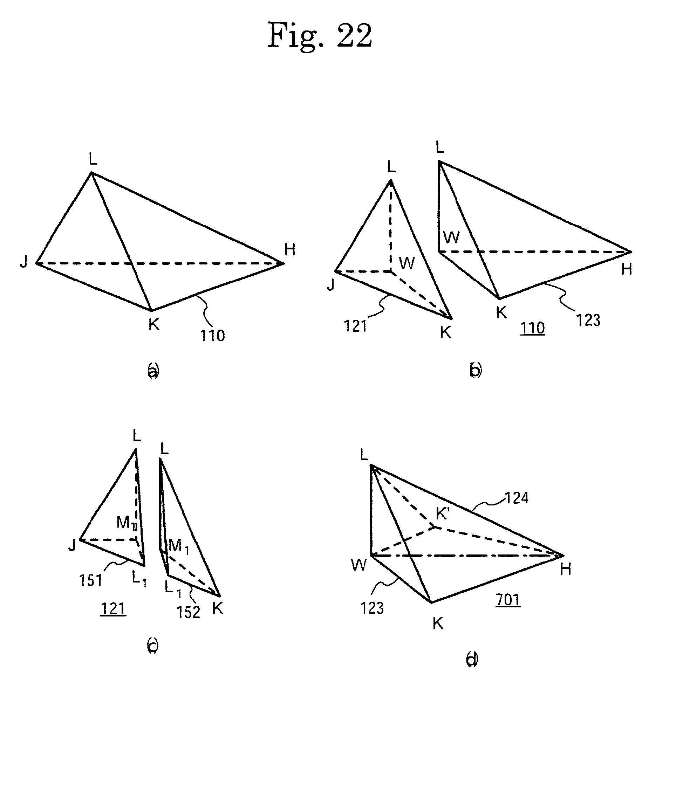

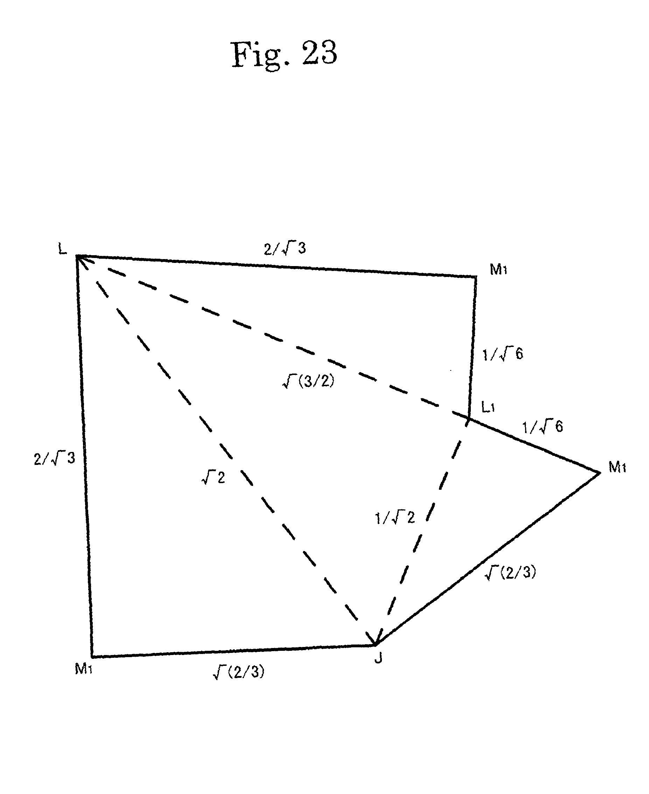

Fig. 22 is referenced. Fig. 22 (a) shows the atom $\alpha$ 110 shown in Fig. 7 (e) seen from a different direction. Next, the atom $\alpha$ 110 is divided in two as in Fig. 22 (b) from the peak L perpendicular to the edge JH with the foot being W. Then, the left side tetrahedron 121 becomes three portions by dividing the regular tetrahedron 100 in a perpendicular direction from the peak and this can be divided into two mirror image symmetrical tetrahedrons 151 and 152 as shown in Fig. 22 (c). The tetrahedron 151 shown in Fig. 22 (c) is an atom and defined as $\xi$. A development of the atom $\xi$ 151 is shown in Fig. 23. Each dimension is shown by ratios. As is shown in Fig. 22 (c), the atom $\xi$ 151 is a tetrahedron (convex polyhedron) which has edges $LM_1$, $M_1L_1$, $L_1M_1$, $M_1J$, $JM_1$, $M_1L_1$, $LL_1$, $LJ$ and $L_1J$. The atom $\xi$ satisfies the following formula (17). Furthermore, as is shown in Fig. 22 (c) the atom $\xi$ has a mirror symmetrical atom $\xi'$ 152.

$$(\text{formula }17)$$

$$LM_1 : M_1L_1 : L_1M_1 : M_1J : JM_1 : M_1L : LL_1, : LJ : L_1J =$$
$$2 / \sqrt{3} : 1 / \sqrt{6} : 1 / \sqrt{6} : \sqrt{(2/3)} : \sqrt{(2/3)} : 2\sqrt{3} :$$
$$\sqrt{(3/2)} : \sqrt{2} : 1 / \sqrt{2} \quad \cdots (17)$$

In addition, with respect to the right side tetrahedron 123 in Fig. 22 (b), a mirror image symmetrical tetrahedron 124 is created and is combined (glued) by the face of triangle HLW. Fig 22 (d) is a quadrangular pyramid obtained from this method and is attached together by an unforeseen shape with the atom $\beta$ 210 and atom $\gamma$ 203.

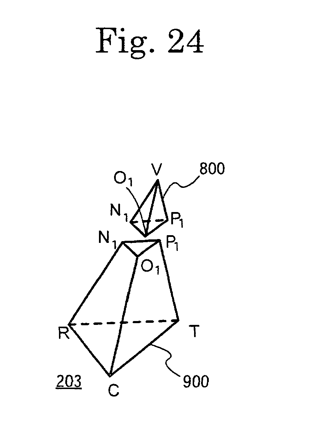

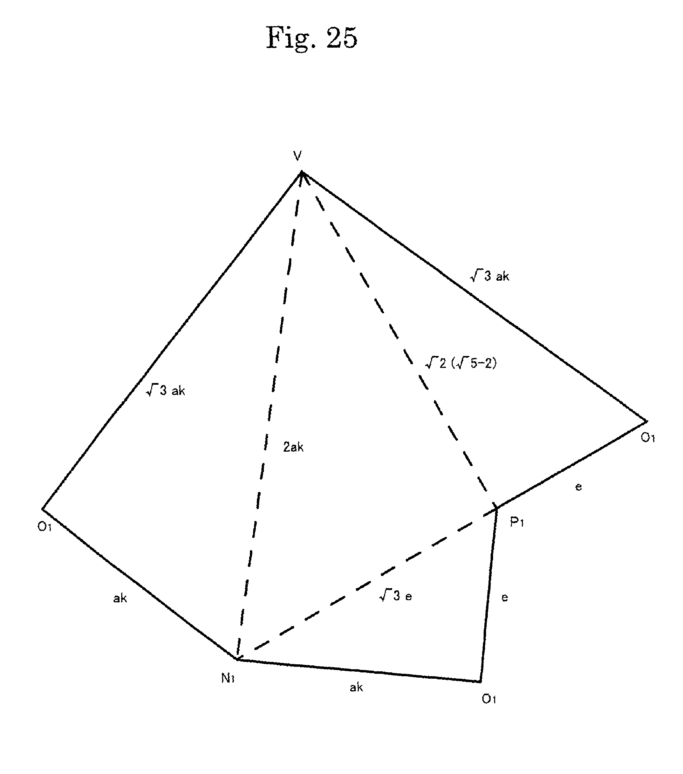

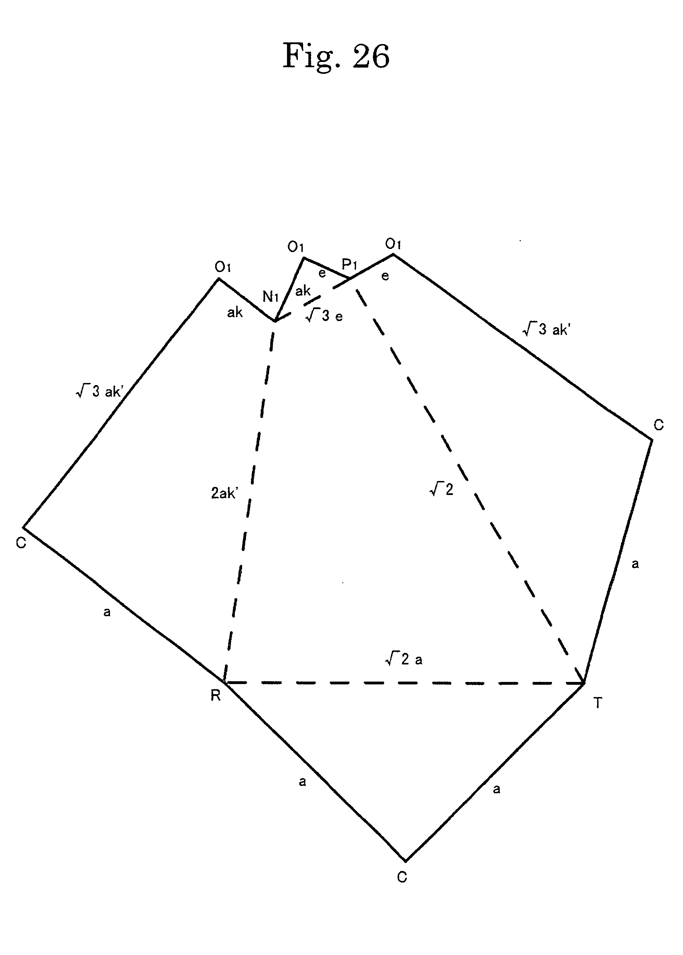

In order to show this, first the atom $\gamma$ 203 is focused on. This is a slightly long and triangular pyramid, however, as is shown in Fig. 24, the atom $\theta$ 800 is cut from the end of the atom $\gamma$. Then, a development of each of the polyhedrons is shown in Fig. 25 and Fig. 26. The polyhedron in which the atom $\theta$ 800 is cut from the end of the atom $\gamma$ is defined as atom $\eta$ 900. In each of Fig. 25 and Fig. 26 which are developments, the dimension of each edge is shown as a ratio. Furthermore, the atom $\eta$ 900 and the atom $\theta$ 800 each has a mirror symmetrical atom $\eta'$ 901 and $\theta'$ 801.

Atom $\theta$ 800 is a tetrahedron (convex polyhedron) which has edges $VO_1$, $O_1P_1$, $P_1O_1$, $O_1N_1$, $N_1O_1$, $O_1V$, $VP_1$, $VN_1$ and $N_1P_1$, as is shown in Fig. 25. Furthermore, the atom $\theta$ has a mirror symmetrical atom $\theta'$ 801. The atom $\theta$ 800 satisfies the formulas (18) and (19) below.

$$(\text{formula }18)$$

$$e = \sqrt{(2/5(9-4\sqrt{5}))} \quad \cdots (18)$$

(formula 19)

$$VO_1 : O_1P_1 : P_1O_1 : O_1N_1 : N_1O_1 : O_1V :$$

$$VP_1 : VN_1 : N_1P_1 =$$

$$\sqrt{3} ak : e : e : ak : ak : \sqrt{3} ak$$

$$\sqrt{2}(\sqrt{5}-2) : 2 ak : \sqrt{3}e \cdots (19)$$

Atom $\eta$ 900 is a pentahedron (convex polyhedron) which has edges $O_1N_1$, $N_1O_1$, $O_1,P_1$, $P_1O_1$, $O_1C$, CT, TC, CR, RC, $CO_1$, $N_1P_1$, $P_1T_1$, TR and $N_1R$, as is shown in Fig. 25. Furthermore, the atom $\eta$ 900 has a mirror symmetrical atom $\eta'$ 901.
Fig. 26 is a development of the atom $\eta$ 900 and satisfies the formula (20) below.

(formula 20)

$$O_1N_1 : N_1O_1 : O_1P_1 : P_1O_1 : O_1C : CT : TC : CR : RC :$$

$$CO_1 : N_1P_1 : P_1T : TR : N_1R =$$

$$ak : ak : e : e : \sqrt{3}ak' : a : a : a : a : \sqrt{3}ak' :$$

$$\sqrt{3}e : \sqrt{2} : \sqrt{2}a : \sqrt{2}ak' \cdots (20)$$

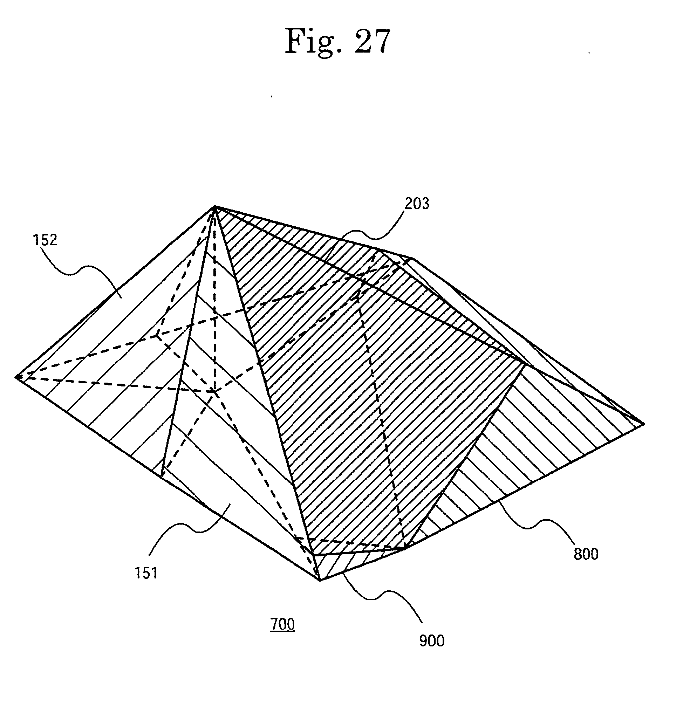

By combining one of three types of atom, $\beta$ 210, $\eta$ 900 and $\theta$ 800, it is possible to make a quadrangular pyramid 701 shown in Fig. 22(d).
By adding four atoms $\theta$ 151 to the quadrangular pyramid 701, two atoms $\alpha$ 110, that is, the polyhedron 700 shown in Fig. 27 is obtained. As stated above, the regular tetrahedron is formed by sixteen $\xi$ 151, four $\beta$ 210, four $\eta$ 900 and four $\theta$ 800, in total $\beta_4\xi_6\eta_4\theta_4$ $(\beta_2\beta'_2\xi_8\xi'_8\eta_2\eta'_2\theta'_2)$. Furthermore, as already indicated, the regular tetrahedron 200 is also formed by $\xi_6$.
When a regular tetrahedron is formed by this method, the entire structure using the atom $\alpha$ 110 is replaced with this, and the regular tetrahedron 100, the cube 200, the regular octahedron 300 which are formed by the atoms $\beta$ 210, $\xi$ 151, $\eta$ 900 and $\theta$ 801 each become:

| | |
|---|---|
| Regular tetrahedron | $\beta_4\xi_{16}\eta_4\theta_4\xi_6$ $(\beta_2\beta'_2\xi_8\xi'_8\eta_2\eta'_2\theta_2\theta'_2\xi_3\xi'_3)$ |
| Cube | $\beta_{16}\xi_{16}\eta_{16}\theta_{16}$ $(\beta_8\beta'_8\xi_8\xi'_8\eta_8\eta'_8\theta_8\theta'_8)$ |
| Regular octahedron | $\beta_{24}\eta_{24}\theta_{24}$ $(\beta_{12}\beta'_{12}\eta_{12}\eta'_{12}\theta_{12}\theta'_{12})$ |

In this way, the number of atoms which are used in the structure increases significantly, however, the type of atom only increases by one.
In the three-dimensional puzzle of the present invention related to embodiment 1, an example in which it is possible to make a structure with a minimum number of atoms $\alpha$, $\beta$, $\gamma$, $\delta$ which form all the regular polyhedrons is explained. However, the three-dimensional puzzle of the present invention related to the present embodiment can form a regular tetrahedron, cube and regular dodecahedron without using the atom $\alpha$. Consequently, because the three-dimensional puzzle of the present invention related to the present embodiment can form the atom $\alpha$ by combining different atoms and form a regular tetrahedron, cube and regular dodecahedron without using the atom $\alpha$, it is possible to visually explain the above stated theorem 1 and demonstrate excellent effects which can compare both by a transformation example using $\xi$, $\theta$, $\eta$ which are the sixth to eighth atoms. Therefore, the three-dimensional puzzle of the present invention related to the present embodiment is also excellent as an educational material.

(Fourth Embodiment)

In the fourth embodiment, an example is explained in which the three-dimensional puzzle which has the atoms explained in the first to third embodiments as structural components is applied to a Fedorov polyhedron or a Fedorov space filling solid. As stated previously, in a convex polyhedron, convex polyhedrons P and Q are congruent if either the two convex polyhedrons P and Q are the same or when they have a relationship where one of the convex polyhedrons is a mirror image of the other.

When a non-congruent convex polyhedron $P_i$ is $1 \leq i \leq n$, then $\Pi = \{P_1, P_2, \cdots, P_n\}$. If at least one element P which is included in $P_i$, is formed by face to face joining of congruent convex polyhedrons of convex polyhedron σ, then convex polyhedron σ is called an atom of $\Pi$.

In addition, a parellelohedron is a convex polyhedron which tiles three-dimensional space using a face to face joining of its translates. Minkowski obtained the following results for a general d-dimensional parallelohedron.

(Minkowski Theorem A)

If P is a d-dimensional parallelohedron, then

1) P is centrally symmetric,
2) All faces of P are centrally symmetric,
3) The projection of P along any of its (d-2) faces onto the complementary 2-plane is either a parallelogram or a centrally symmetric hexagon.

(Minkowski Theorem B)

The number $f_{d-1}$ (P) of faces of a d-parallelohedron P does not exceed $2(2^d - 1)$ and there is a parallelohedron P with $f_{d-1} = 2(2^d - 1)$.

Dolbilin extended Minkowski's theorems for non-face to face tilings of space. There are also numerous studies on parallelohedra discussed by Alexandrov and Gruber.

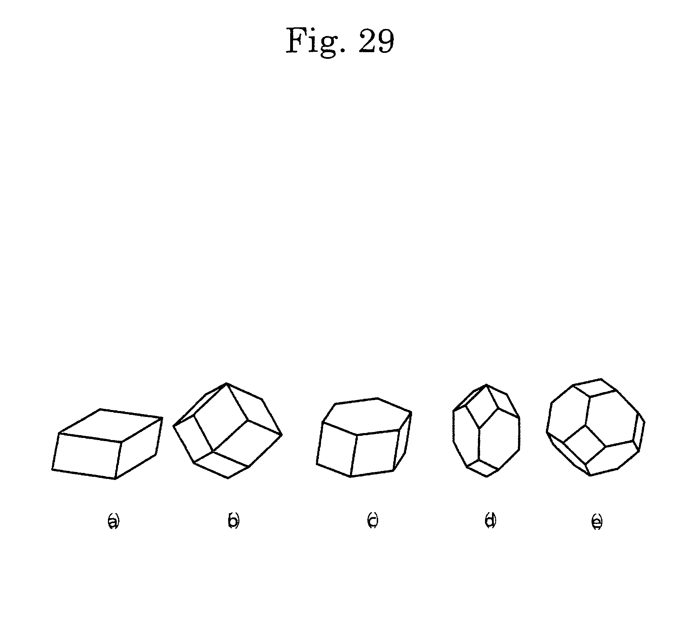

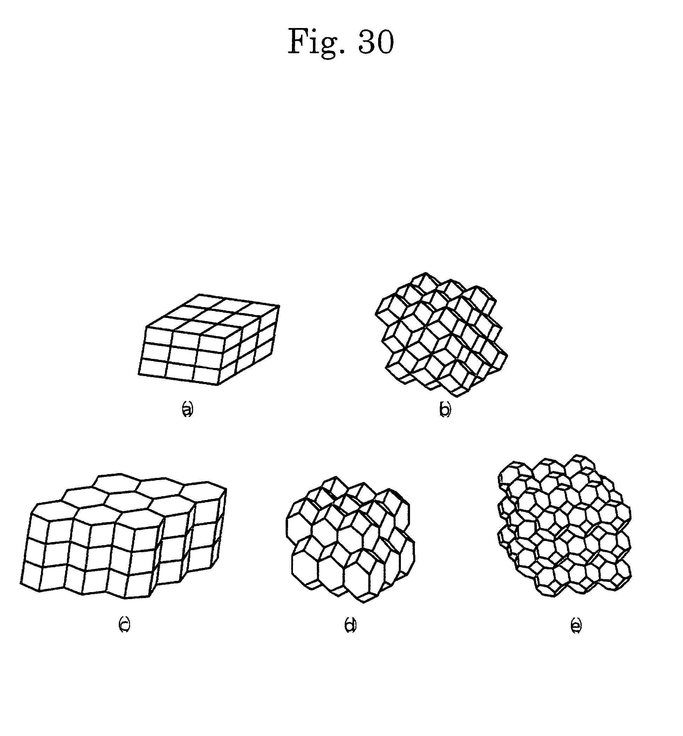

In 1890, a Russian crystallographer, Evgraf Fedorov, established that there are exactly five types of parallelohedra, namely, parallelopiped (cube), rhombic dodecahedron, skewed hexagonal prism (parallel hexagonal prism), elongated rhombic dodecahedron and truncated octahedron shown in Fig. 29 (a) to Fig. 29 (e). These parallelohedra are called "Fedrov polyhedrons" or "Fedrov space filling solids". Fig. 30 (a) to Fig. 30 (e) shows the space filling characteristics of each type of parallelohedron.

The characteristics which are common to these space filling solids is not only that any one type of solid can fill space without any gaps, but also that any two solids can be overlapped by only translation of it as filling the space of each solid.

Let $\Pi_1$ be a group consisting of a cube, skewed hexagonal prism, rhombic dodecahedron, elongated rhombic dodecahedron and truncated octahedron. The inventors keenly examined which atom should be adopted for filling all the space filling solids included in $\Pi_1$ by the minimum number of atoms. As a result, the shape of the minimum number of atoms for filling all the space filling solids was discovered. Next, the circumstances in which the inventors discovered the shape of the minimum number of atoms for filling all the space filling solids is explained. In addition, in the present embodiment, a three-dimensional puzzle having convex polyhedrons which form five types of Fedrov space filling solids is explained.

(Cube and Rhombic Dodecahedron)

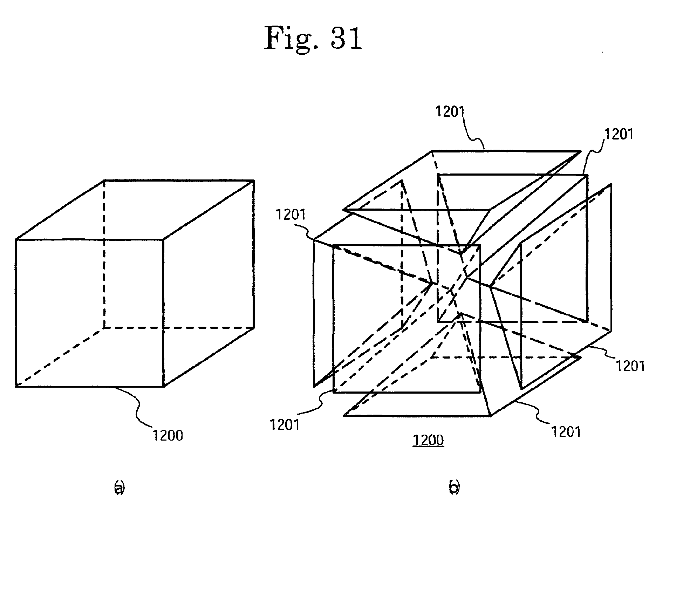

The cube 1200 in Fig. 31 (a) is decomposed into six congruent quadrangular pyramids 1201 shown in Fig. 31 (b) using six planes, each of which passes through the center of the cube and contains two opposite edges. The quadrangular pyramid 1201, as shown in Fig. 31 (a), has a square base and the four sides are congruent isosceles triangles.

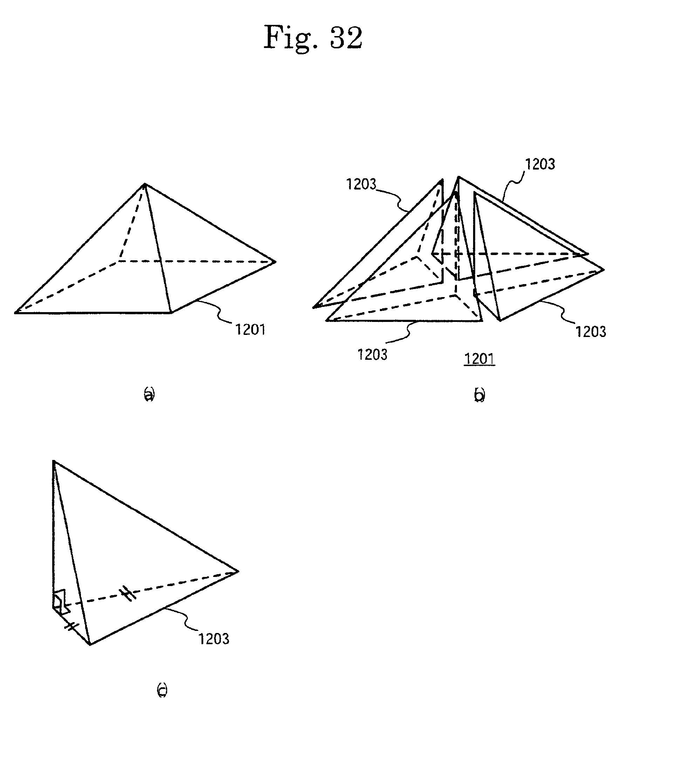

The quadrangular pyramid 1201 is further divided into four congruent triangular pyramids 1203 as shown in Fig. 32 (b) by two perpendicular planes passing through the peak and through each of the two diagonals of the base. When these triangular pyramids 1203 are shown again in Fig. 32 (c), because three faces are orthogonal at one peak, the triangular pyramid 1203 is called a right tetra 1203. Thus, the cube 1200 can be divided into twenty-four congruent right tetra 1203. If the process is reversed, then it is possible to form the cube 1200 by twenty-four congruent right tetra 1203.

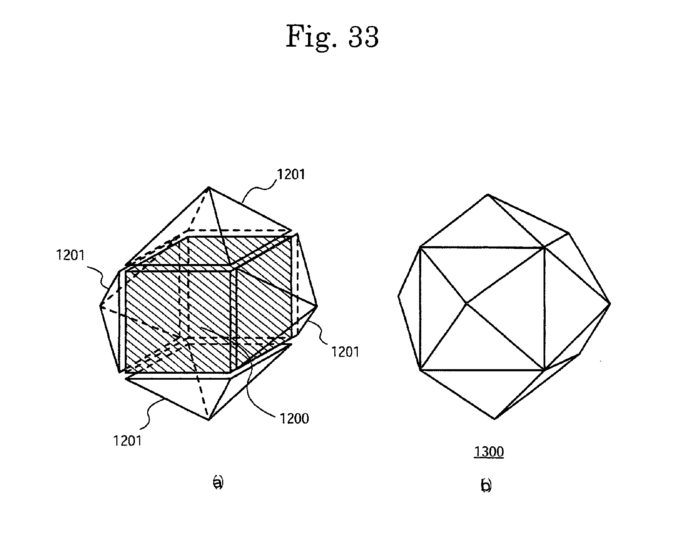

In addition, as is shown in Fig. 33 (a) and Fig. 33 (b), by attaching a quadrangular pyramid 1201 to each of the six congruent faces of the cube 1200, a rhombic dodecahedron 1300 is formed. This shows that it is possible to form a rhombic dodecahedron 1300 from forty-eight congruent right tetra 1203. In this way, the right tetra 1203 is a common constituent element of the cube 1200 and the rhombic dodecahedron 1300.

(Skewed Hexagonal Prism)

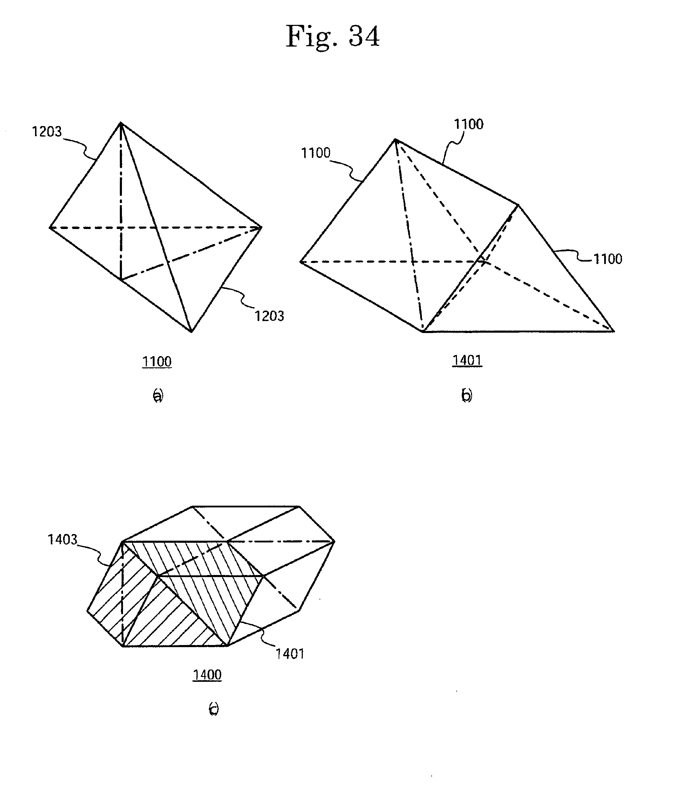

As is shown in Fig. 32 (c), the base of the right tetra 1203 is a right isosceles triangle. Two right tetras 1203 which are glued at the base of these right isosceles triangles form another tetrahedron 1100 as is shown in Fig. 34 (a). This tetrahedron is called a Sphenoid 1100. In Fig. 34 (a) the dash line represents the gluing surface of two triangular pyramids.

It is known that the sphenoid 1100 has noteworthy characteristics which are called self-expanding. This is because when eight sphenoid 1100 are combined, the length of each edge expands to exactly twice that of a similar triangular pyramid which makes it easy to understand that the sphenoid is a space filling solid.

Moreover, when three sphenoid 1100 are combined it is possible to form a triangular prism 1401 with a regular triangle as a perpendicular cross section shown in Fig. 34 (b). Then, the skewed hexagonal prism 1400 of Fedorov shown in Fig. 34 (c) is formed using three pairs of the triangular prism 1401 and its mirror image symmetrical triangular prism 1403 so that the upper and lower faces are adjusted to form parallel hexagonals. Therefore, a skewed hexagonal prism 1400 can be formed by eighteen sphenoids 1100.

(Elongated Rhombic Dodecahedron)

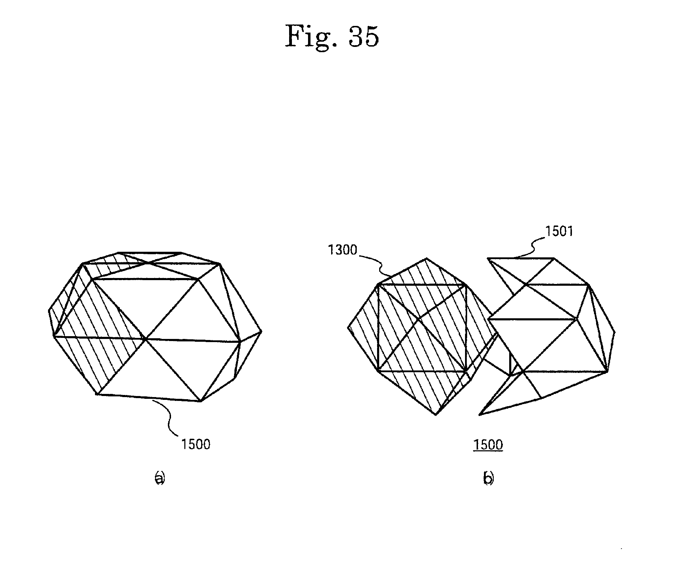

Next, Fig. 35 (a) shows an elongated rhombic dodecahedron 1500. This elongated rhombic dodecahedron 1500 is formed from two parts. One part is a rhombic dodecahedron 1300 and the other part is a concave polyhedron 1501 which can be obtained from the rhombic dodecahedron. In order to obtain the second convex polyhedron 1501, we consider four peaks of the rhombic dodecahedron 1300. The elongated rhombic dodecahedron 1500 is cut along the edges containing these peaks shown in Fig. 35, and the elongated rhombic dodecahedron 1500 is opened at this peak. The obtained polyhedron 1501 is formed in the shape of a helmet. As stated previously, the rhombic dodecahedron 1300 consists of forty-eight right tetras 1203. Therefore, the elongated rhombic dodecahedron 1500 can be formed using ninety-six right tetras 1203.

(Truncated Octahedron)

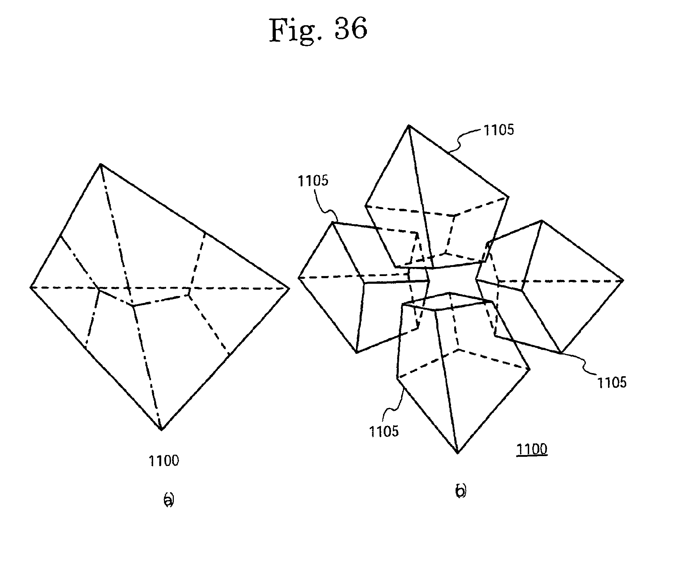

The sphenoid 1100 has another important property. As is shown in Fig. 36 (a), it can be divided into four congruent hexahedrons 1105 as is shown in Fig. 36 (b) by using six planes wherein each plane passes through the midpoint of an edge of the sphenoid 1100 and must also be perpendicular to the edge. Each of these hexahedrons 1105 is called a c-squadron.

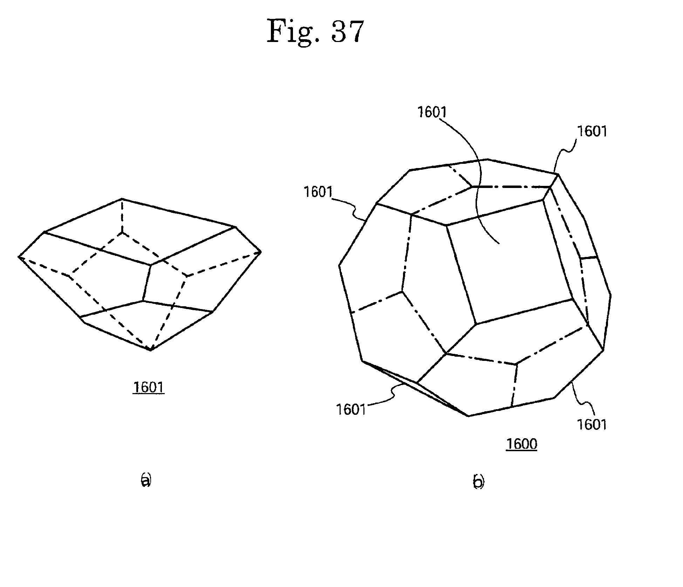

By arranging these four c-squadrons in an appropriate way, it is possible to form an enneahedron (diamond) 1601 as shown in Fig. 37 (a). Then, while adjusting so that a square and a regular hexahedron appear on the surfaces, a truncated octahedron 1600 is formed as shown in Fig. 37 (b) by combining (glued) together six diamonds 1601. In other words, the c-squadron 1105 is a constituent element of the truncated octahedron 1600 and the truncated octahedron 1600 can be formed using twenty-four c-squadrons 1105.

From the above, it can be seen that the cube (parallel hexagram) 1200 can be formed by twenty-four right tetras 1203, the rhombic dodecahedron 1300 can be formed by forty-eight right tetras 1203, the skewed hexagonal prism 1400 can be formed by eighteen sphenoids 1100, the elongated rhombic dodecahedron 1500 can be formed by ninety-six tetras and the truncated octahedron can be formed by twenty-four c-squadrons 1105.

Next, an examination is made whether common constituent elements exist between the right tetra 1203, sphenoid 1100 and c-squadron 1105.

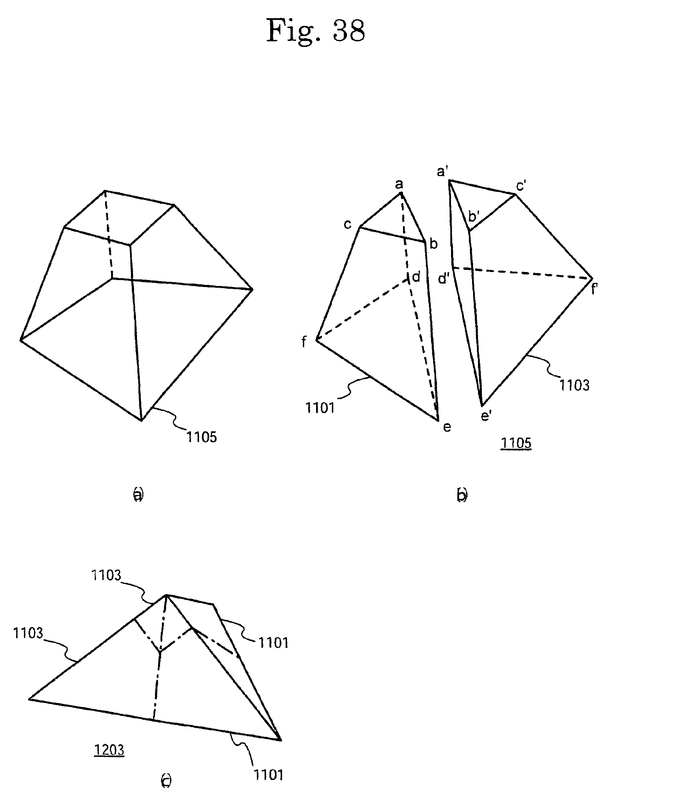

Here, one among the four c-squadrons 1105 shown in Fig. 36 (b) is shown again in Fig. 38 (a). The c-squadron 1105 is a solid with left and right symmetry and is divided into two congruent pentahedrons 1101 and 1103 as is shown in Fig. 38 (b). Then, as is shown in Fig. 38 (c), by using two each of these new pentahedrons 1101 and 1103, it is possible to form the right tetra 1203 shown in Fig. 32 (c).

In addition, as is shown in Fig. 1, it is possible to form the sphenoid 1100 with eight of these pentahedrons (four pentahedrons 1101 and four pentahedrons 1103). That is, the pentahedrons 1101 and 1103 are a common constituent element of the five types of Fedrov space filling solid.

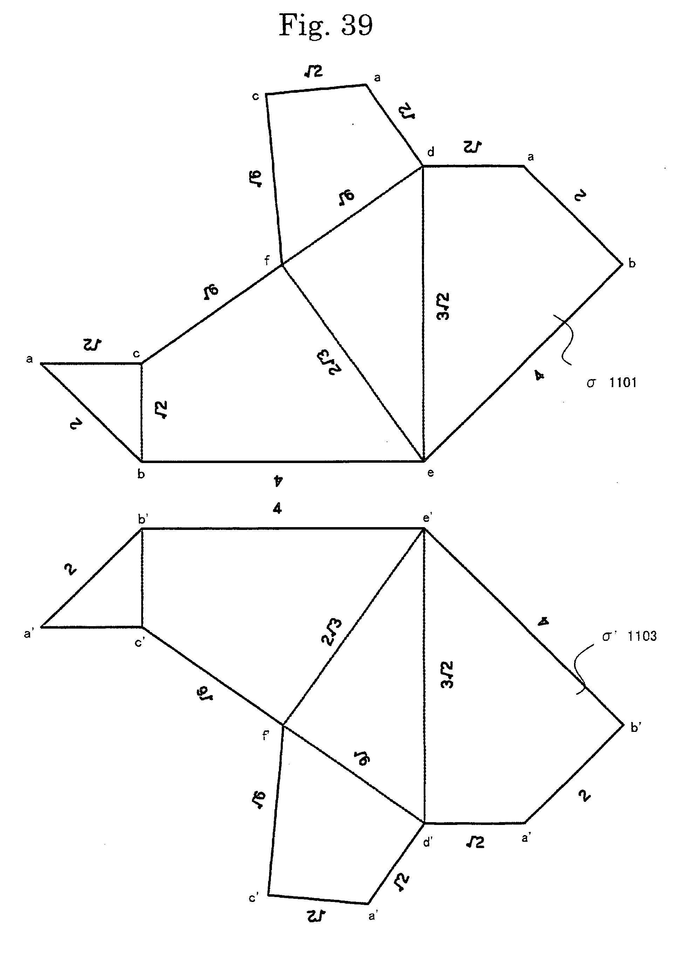

It is not possible to divide the pentahedrons 1101 and 1103 into further congruent solids. The pentahedrons 1101 and 1103 are atoms of the five types of Fedrov space filling solids, and the pentahedron 1101 is defined as σ and its mirror image 1103 is defined as σ'. A development including dimensions of the atom σ 1101 and atom σ' 1103 is shown in Fig. 39. As is shown in Fig. 39, the atom σ is a pentahedron (convex polyhedron) which has edges ab, bc, ca, cf, fc, ca, ad, da, ab, be, eb, de, ef, and fd, and the atom σ' is a pentahedron (convex polyhedron) which has edges a'b', b'c', c'a', c'f', f'c', c'a', a'd', d'a', a'b', b'e', e'b', d'e', e'f', and f'd'. The atom σ satisfies the following formula (1). Furthermore, the formula of the atom σ' which is the mirror image of the atom σ is omitted.
$$\text{(formula 21)}$$

$$ab, bc, ca, cf, fc, ca, ad, da, ab, be, eb, de, ef, fd =$$
$$2 : \sqrt{2} : \sqrt{2} : \sqrt{6} : \sqrt{6} : \sqrt{2} : \sqrt{2} : \sqrt{2} : 2 : 4 : 4 : 3\sqrt{2} :$$
$$2\sqrt{3} : \sqrt{6} \quad \cdots\cdots\cdots \quad (21)$$

By using the atom σ 1101 and atom σ' 1103, it is clear that the cube (parallel hexahedron) 1200 can be formed by ninety-six atoms σ (forty-eight atoms σ 1101 and forty-eight atoms σ' 1103), the rhombic dodecahedron 1300 can be formed by one hundred and ninety-two atoms σ (ninety-six atoms σ 1101 and ninety-six atoms σ' 1103), the truncated octahedron 1600 can be formed by forty-eight atoms σ (twenty-four atoms σ' 1103), the skewed hexagonal prism 1400 can be formed by one hundred and forty-four atoms σ (seventy-two atoms σ 1101 and seventy-two atoms σ' 1103) and the elongated rhombic dodecahedron 1500 can be formed by three-hundred and eighty-four atoms σ (one-hundred and ninety-two atoms σ 1101 one-hundred and ninety-two atoms σ' 1103).

In addition, a cube is formed by ninety-six atoms σ 1101 and atoms σ' 1103, however, it is possible to form a cube with as little as twenty-four atoms σ (twelve atoms δ 1101 and twelve atoms σ' 1103).

From the above, it was discovered that the minimum number of atoms for forming a Fedrov space filling solid is one type of atom σ (and its mirror image σ').

Here, it is clear that it is possible to express the minimum number of atoms which form the Fedrov space filling solids as theorem 2 under the definitions (1) to (4) below.

(1) The polyhedrons P and Q are "congruent" means that P and Q are either exactly the same shape or are in a mirror image relationship.
(2) A polyhedron is "indecomposable" means P are indivisible into two or more congruent polyhedrons.
(3) Let Π be a group of polyhedrons $P_1$, $P_2$, $\cdots\cdot P_n$.

i.e. II = {$P_1$, $P_2$, $\cdots\cdot P_n$}
Let E be a group of indecomposable polyhedrons $e_1$, $e_2$, $\cdots\cdot e_m$,
i.e. E = {$e_1$, $e_2$, $\cdots\cdot e_m$}, $\forall e_1$ is indecomposable, $e_i$ and $e_j$ are non-congruent (i≠j)
At this time, E is a group E (Π) of the element (atom) of Π means satisfying formula (15) below.

$$\text{(formula 22)}$$

$$Pi = \sum_{i=1}^{m} a_i e_i \qquad (\forall_i < 1 \leq i \leq n), \ a_i \text{ is a nonnegative integer.}$$

$$\cdots\cdots (22)$$

That is, whichever polyhedron $P_i$ belongs to Π, it is possible to divide into an indecomposable polyhedron belonging to E. (4) The element number (atom number) e (Π) of Π means the minimum number of an order among various element groups with respect to Π.
That is e (Π) = min | E (Π) |
(Theorem 2)

Let $\Pi_2$ = {a group of Fedrov space filling solids}

e $(\Pi_2) \leq 1$, E $(\Pi_2)$ = {σ}

Here, the three-dimensional puzzle of the present invention related to the present embodiment which uses a minimum number of atoms σ to form all the Fedrov space filling solids will be explained in detail. The three-dimensional puzzle of the present invention related to the present embodiment creates Fedrov space filling solids using a minimum number of atoms σ and demonstrates excellent effects of being able to visually explain the above stated theorem 2. Consequently, the three-dimensional puzzle of the present invention related to the present embodiment is excellent as an educational material for explaining the above stated theorem 2.

(Regular Tetrahedron three-dimensional puzzle)

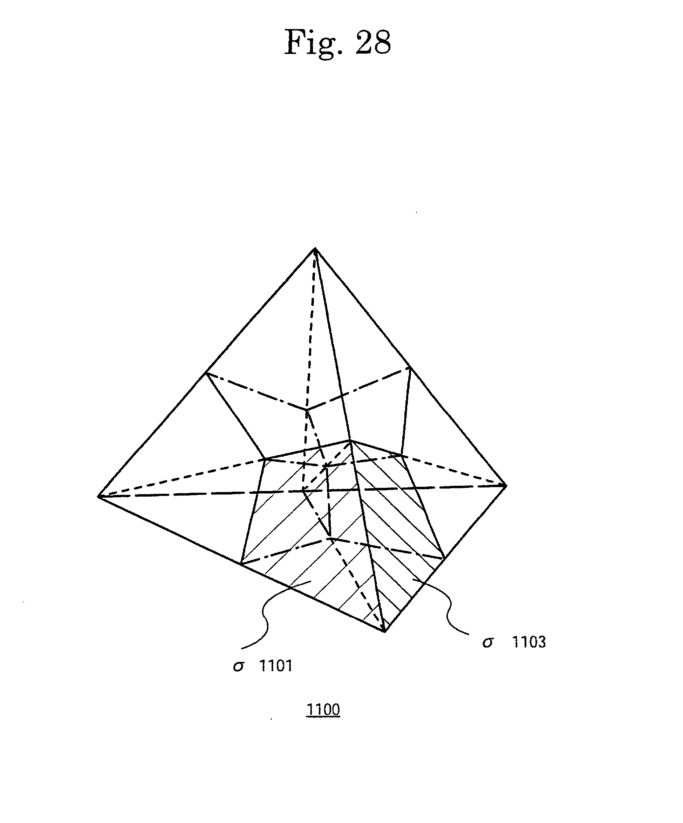

Fig. 28 is referenced. Fig. 28 is a three-dimensional puzzle of the present invention related to the present embodiment and shows a sphenoid three-dimensional puzzle. As is shown in Fig. 28, the three-dimensional puzzle (sphenoid) of the present invention related to the present embodiment can be formed using four pieces which have a shape of an atom σ 1101 and four pieces which have a shape of the atom σ 1101 mirror image σ' 1103 as explained above in detail.

(Parallel Hexagram three-dimensional puzzle)

The parallel hexagram three-dimensional puzzle of the present invention related to the present embodiment can be formed using forty-eight pieces which have a shape of an atom σ 1101 and forty-eight pieces which have a shape of the atom σ 1101 mirror image σ' 1103 as explained above in detail.

(Skewed Hexagonal prism three-dimensional puzzle)

The skewed hexagonal three-dimensional puzzle of the present invention related to the present embodiment can be formed using seventy-two pieces which have a shape of an atom σ1101 and seventy-two which have a shape of the atom σ 1101 1 mirror image σ' 1103 as explained above in detail.

(Truncated Octahedron three-dimensional puzzle)

The truncated octahedron three-dimensional puzzle of the present invention related to the present embodiment can be formed using twenty-four pieces which have a shape of an atom σ 1101 and twenty-four which have a shape of the atom σ 1101 mirror image σ' 1103 as explained above in detail.

(Rhombic dodecahedron three-dimensional puzzle)

The rhombic dodecahedron three-dimensional puzzle of the present invention related to the present embodiment can be formed using ninety-six pieces which have a shape of an atom σ 1101 and ninety-six which have a shape of the atom σ 1101 mirror image σ' 1103 as explained above in detail.

(Elongated Rhombic Dodecahedron three-dimensional puzzle)

The elongated rhombic dodecahedron three-dimensional puzzle of the present invention related to the present embodiment can be formed using one hundred and ninety-two pieces which have a shape of an atom σ 1101 and one hundred and ninety-two which have a shape of the atom σ 1101 mirror image σ' 1103 as explained above in detail.
The three-dimensional puzzle of the present invention related to the present embodiment which has the shape of a Fedrov space filling solid comprised of five types of polyhedron, namely a parallel hexagram, skewed hexagonal prism, truncated octahedron, rhombic dodecahedron and elongated rhombic dodecahedron, can be assembled from a piece which has a shape of one atom σ 1101 and a piece which has the shape of one atom σ' 1103 mirror image. As a result, it is possible to visually explain the theorem 2 stated above and the three-dimensional puzzle of the present invention related to the present embodiment is excellent as an educational material.

(Fifth Embodiment)

(Elongated rhombic dodecahedron including a space filling solid)

The inventors discovered that the five types of Fedrov space filling solids each require a multiple of twenty-four c-squadrons, that is, a multiple of twenty-four atoms σ 1101 and σ' 1103.

From the proof of the elongated rhombic dodecahedron in theorem 2 and Fig. 35, it is clear that the elongated rhombic dodecahedron 1500 includes a rhombic dodecahedron 1300. In addition, from the proof of the cube 1200 and the rhombic dodecahedron 1300 in theorem 1, it was shown that the rhombic dodecahedron 1300 includes the cube 1200. The rhombic dodecahedron 1300 is obtained by gluing the square bottom of the quadrangular pyramid 1201 to each face of the cube 1200. Therefore, the elongated rhombic dodecahedron 1500 includes the rhombic dodecahedron 1300 and the rhombic dodecahedron 1300 includes the cube 1200.

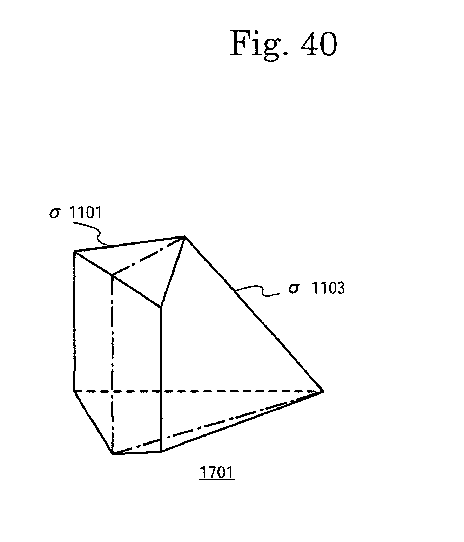

The truncated octahedron 1600 includes the cube 1200 by a special method. When atom σ 1101 and atom σ' 1103 which are congruent pentahedrons shown in Fig. 38 (b) are considered, a hexahedron 1701 including seven vertices and eleven edges shown in Fig. 40 by gluing the atoms.

This hexahedron 1701 has a face comprised of three triangles (one right isosceles triangle and two congruent right triangles), two quadrilaterals and one pentagon. This polyhedron is called a tripenquadron.

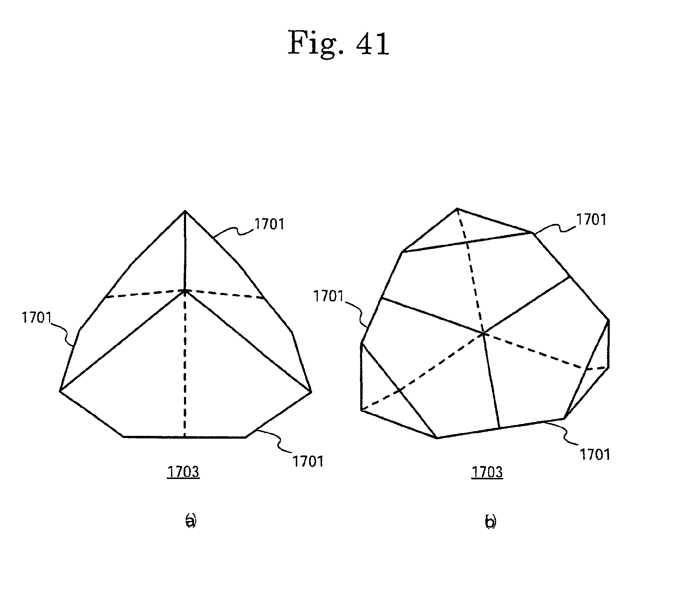

The polyhedron 1703 show in Fig. 41 (a) is obtained when three tripenquadrons 1701 are glued along their right triangular faces so that they all meet at the vertex. The bottom face of this polyhedron 1703 is a regular hexahedron shown in Fig. 41 (b).

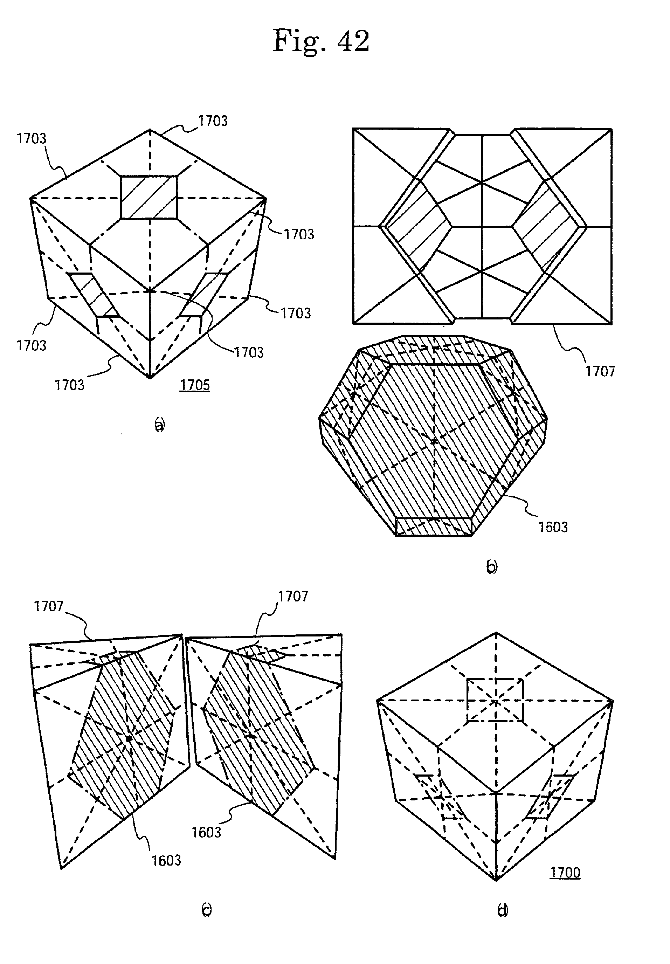

When eight of these polyhedrons 1703 are glued along the right isosceles triangular faces, a cube 1705 is obtained having six holes at the center of each face as shown in Fig. 42 (a). In order to examine the interior of the cube 1705 with open hole, the cube is opened by a plane through the diagonals of two opposite faces which intersect these faces perpendicularly. When a diagonal cross section shown in Fig. 42 (b) is viewed, it reveals that the cross section in the interior of the polyhedron 1707 made by cutting the cube 1705 with open holes consist of regular hexagons and that the hole is obtained by carving out half of a truncated octahedron 1603. Fig. 42 (c) and Fig. 42 (d) show a cube which is the result of assembling the truncated octahedron and cube with open holes. It is clear that the truncated octahedron 1600 is included in the cube 1700 in a special way.

Finally, it is shown that a skewed hexagonal prism is included in an elongated rhombic dodecahedron in a particular way. The elongated rhombic dodecahedron 1500 comprised of the rhombic dodecahedron 1300 and helmet shaped polyhedron 1501 is again considered.

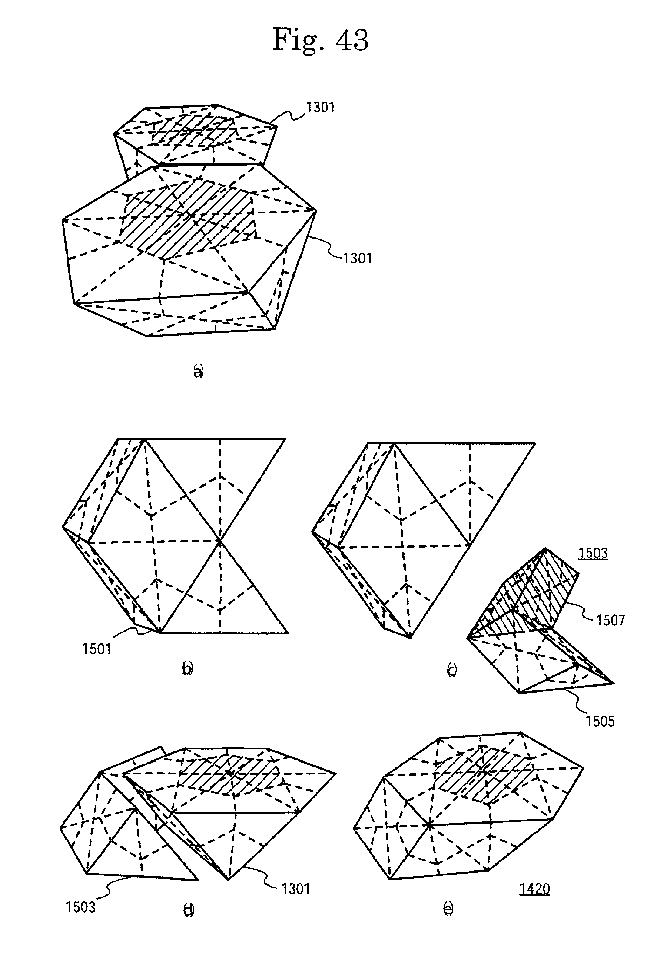

First, as is shown in Fig. 43 (a), the rhombic dodecahedron 1300 is divided into two congruent polyhedrons 1301 and only one of these is considered. Next, a part of the helmet shaped polyhedron 1501 shown in Fig. 43 (b) is cut off as shown in Fig. 43 (c). The right side polyhedron 1503 in Fig. 43 (c) is V-shaped and consists of two skewed triangular prisms 1505 and 1507 and the skewed triangle prism 1507 is a mirror image of the skewed triangular prism 1505. Each skewed triangular prism is formed by gluing three sphenoids as shown in Fig. 36 (a).

If the V-shaped polyhedron 1503 is glued to the lower half of the rhombic dodecahedron 1301, the skewed hexagonal prism 1420 shown in Fig. 43 (d) and Fig. 43 (e) is obtained. In this way, it is shown that the skewed hexagonal prism 1420 is included within the elongated rhombic dodecahedron 1500 in a special way.

The three-dimensional puzzle of the present invention related to the present embodiment which has the shape of a Fedrov space filling solid comprised of five types of polyhedron, namely a cube, skewed hexagonal prism, rhombic dodecahedron, truncated octahedron, and elongated rhombic dodecahedron, can be assembled from a piece which has a shape of one atom σ 1101 and a piece which has the shape of one atom σ' 1103 of its mirror image. In addition, it is possible to visually explain the inclusion of the cube, skewed hexagonal prism, rhombic dodecahedron and truncated octahedron in the elongated rhombic dodecahedron and the three-dimensional puzzle of the present invention related to the present embodiment is excellent as an educational material.

(Truncated octahedron three-dimensional puzzle)

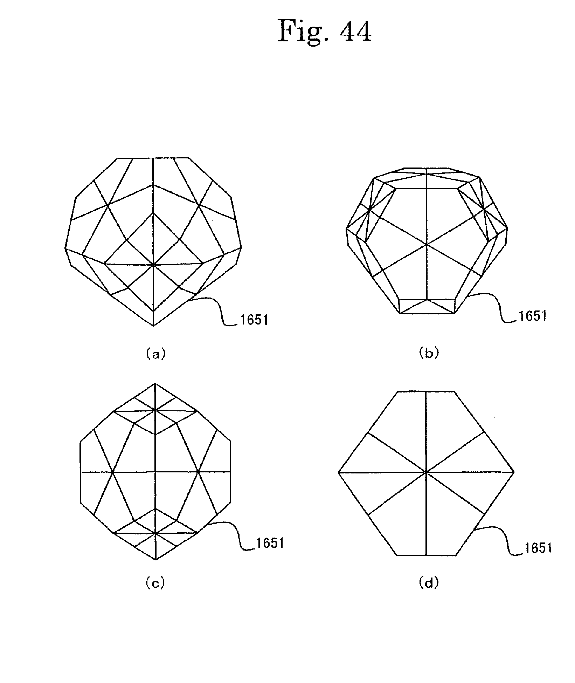

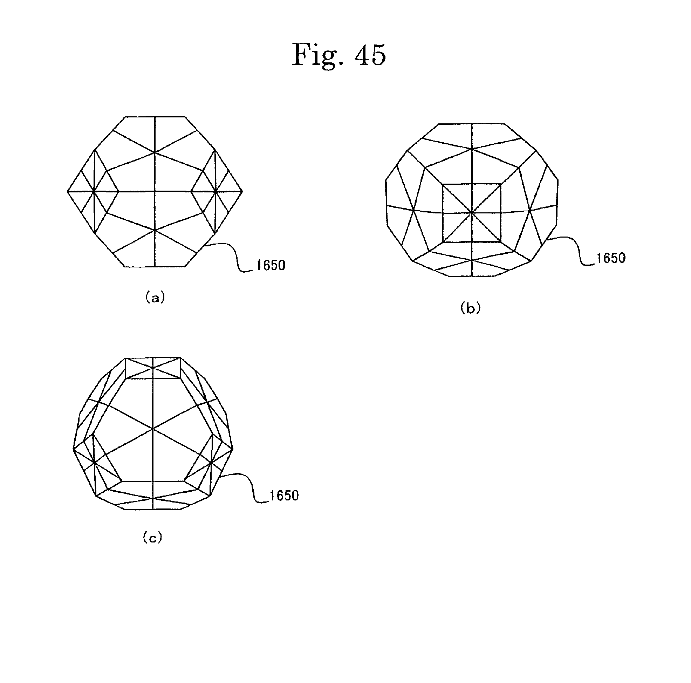

Fig. 44 shows the arrangement of a puzzle 1651 which is half of a truncated octahedron three-dimensional puzzle of the present invention related to the present embodiment. (a) shows a side face view, (b) shows a side face view, (c) shows an upper face view and (d) shows a bottom face view. In addition, Fig. 45 shows the arrangement of a truncated octahedron three-dimensional puzzle 1650. (a) shows a side face view, (b) shows a side view and (c) shows a bottom face view. The truncated octahedron three-dimensional puzzle is formed using twenty-four pieces which have the shape of the atom σ1101 and twenty-four pieces which have the shape of the mirror image σ' 1103 of the atom σ 1101 as explained in detail above.

(Cube three-dimensional puzzle)

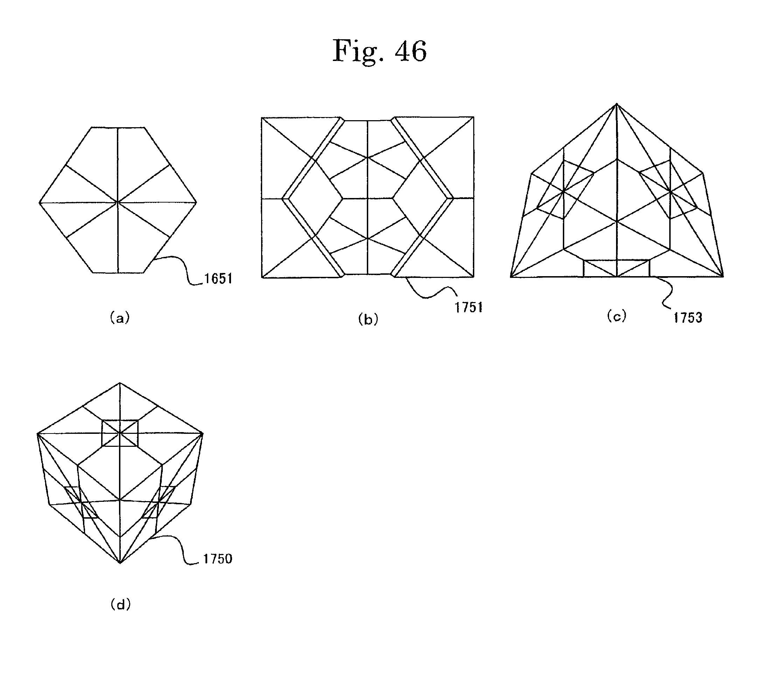

Fig. 46 shows an arrangement of a cube three-dimensional puzzle of the present invention related to the present embodiment. (a) shows the bottom face of a puzzle 1651 which is half of the truncated octahedron three-dimensional puzzle, (b) shows a puzzle 1751 by a cross section of a cube with open holes, (c) shows a puzzle 1753 of half of a cube in which the puzzle 1651 which is half of the truncated octahedron three-dimensional puzzle is glued to puzzle 1751 formed by cutting the cube with open holes, (d) shows a cube three dimensional puzzle 1750. The cube three-dimensional puzzle can be formed using forty-eight pieces which have the shape of the atom σ 1101 and forty-eight pieces which have the shape of the mirror image σ' 1103 of the atom δ 1101 as explained in detail above.

(Rhombic dodecahedron three-dimensional puzzle)

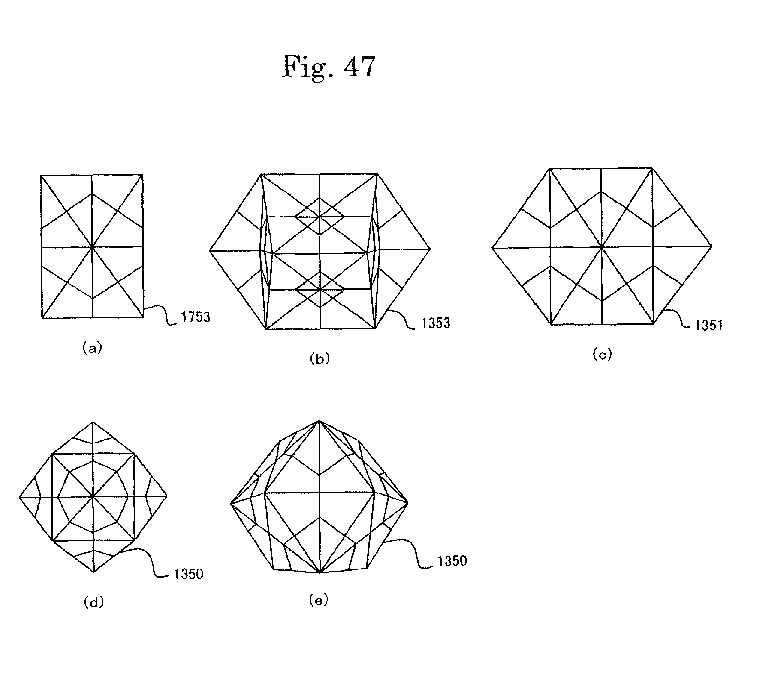

Fig. 47 shows an arrangement of a rhombic dodecahedron three-dimensional puzzle of the present invention related to the present embodiment. (a) shows puzzle 1753 of half of a cube, (b) shows puzzle 1353 without the half of the cube from the puzzle 1351 which is half of a rhombic dodecahedron, (c) shows the puzzle 1351 which is half of a rhombic dodecahedron, (d) shows a side face view of rhombic dodecahedron puzzle 1350, (e) shows an upper face view of the rhombic dodecahedron puzzle 1350. The rhombic dodecahedron three-dimensional puzzle can be formed using ninety-six pieces which have the shape of the atom σ 1101 and ninety-six pieces which have the shape of the mirror image σ' 1103 of the atom σ 1101 as explained in detail above.

(Skewed hexagonal prism three-dimensional puzzle)

Fig. 48 shows an arrangement of a skewed hexagonal prism three-dimensional puzzle of the present invention related to the present embodiment. (a) shows a side face view of puzzle 1553 cut from a helmet shaped polyhedron puzzle 1551, (b) shows a front face view of the puzzle 1553, (c) shows a back face view of the puzzle 1553, (d) shows an exemplary view of the formation of a skewed hexagonal prism 1450 by the puzzle 1553 which is cut away from the helmet shaped polyhedron puzzle 1551 and a puzzle 1351 which is half of the rhombic dodecahedron 1350, (e) shows an upper face view of the skewed hexagonal prism 1450, (f) shows a side face view of the skewed hexagonal prism 1450. The skewed hexagonal prism 1450 three-dimensional puzzle can be formed using seventy-two pieces which have the shape of the atom σ 1101 and seventy-two pieces which have the shape of the mirror image σ' 1103 of the atom σ 1101 as explained in detail above.

(Elongated rhombic dodecahedron three-dimensional puzzle)

Fig. 49 shows an arrangement of an elongated rhombic dodecahedron three-dimensional puzzle of the present invention related to the present embodiment. (a) shows a side face view of the helmet shaped polyhedron puzzle 1551, (b) shows a front face view of the helmet shaped polyhedron puzzle 1551, (c) shows a back view of the helmet shaped polyhedron puzzle 1551, (d) shows an exemplary view of the formation of an elongated rhombic dodecahedron three-dimensional puzzle 1550 by the helmet shaped polyhedron puzzle 1551 and the rhombic dodecahedron puzzle 1350, (e) shows an upper face view of the elongated rhombic dodecahedron three-dimensional puzzle 1550, (f) shows a side face view of the elongated rhombic dodecahedron three-dimensional puzzle 1550. The elongated rhombic dodecahedron three-dimensional puzzle 1550 can be formed using one hundred and ninety-two which have the shape of the atom σ 1101 and one hundred and ninety-two which have the shape of the mirror image σ' 1103 of the atom σ 1101 as explained in detail above.

The three-dimensional puzzle of the present invention related to the present embodiment which has the shape of a Fedrov space filling solid comprised of five types of polyhedron, namely a cube, skewed hexagonal prism, rhombic dodecahedron, truncated octahedron and elongated rhombic dodecahedron, can be assembled from a piece which has a shape of one atom σ 1101 and a piece which has the shape of one atom σ' 1103 of its mirror image. In addition, it is possible to visually explain the theorem 2 stated above and the three-dimensional puzzle of the present invention related to the present embodiment is excellent as an educational material.

**Claims**

**1.** A three-dimensional puzzle comprising:

four types of convex polyhedrons from which a regular tetrahedron, a cube, a regular octahedron, a regular dodecahedron or a regular icosahedron are formed;

wherein

three types among the four types of convex polyhedrons each having a pair of convex polyhedrons in a mirroring image relationship;

the four type of convex polyhedrons are indivisible into two or more congruent shaped polyhedrons; and

the regular tetrahedron, the cube, the regular octahedron, the regular dodecahedron and the regular icosahedron are formed using only the four types of convex polyhedrons so that the interior of the regular tetrahedron, the cube, the regular octahedron, the regular dodecahedron and the regular icosahedron are filled.

2. A three-dimensional puzzle comprising:

five types of convex polyhedrons from which a regular tetrahedron, a cube, a regular octahedron, a regular dodecahedron or a regular icosahedron are formed;

wherein

four types among the five types of convex polyhedrons each having a pair of convex polyhedrons in a mirroring image relationship;

the five type of convex polyhedrons are indivisible into two or more congruent shaped polyhedrons; and

the regular tetrahedron, the cube, the regular octahedron, the regular dodecahedron and the regular icosahedron are formed using only the five types of convex polyhedrons so that the interior of the regular tetrahedron, the cube, the regular octahedron, the regular dodecahedron and the regular icosahedron are filled.

3. A Fedorov space-filling three-dimensional puzzle comprising:

a plurality of first convex polyhedrons and a plurality of second convex polyhedrons which are in a mirroring relationship with the first convex polyhedrons from which the three-dimensional puzzle is formed;

wherein

the plurality of first convex polyhedrons and the plurality of second convex polyhedrons each are indivisible into two or more congruent shaped polyhedrons; and

the plurality of first convex polyhedrons and the plurality of second convex polyhedrons form all the Fedorov space-filling three dimensional solids by filling the interior of all the Fedorov space-filling three dimensional solids.

4. The Fedorov space-filling three-dimensional puzzle according to claim 1, further comprising:

an elongated rhombic dodecahedron which is formed using the plurality of first convex polyhedrons and the plurality of second convex polyhedrons includes a truncated octahedron, a parallel hexahedron, a skewed hexagonal prism and a rhombic dodecahedron.

# Fig. 1

# Fig. 2

200

a)

200

201

b)

# Fig. 3

a)                                                    b)

# Fig. 4

(a)                                         (b)

# Fig. 5

(a)

(b)

(c)

# Fig. 6

a)

b)

c)

# Fig. 7

# Fig. 8

# Fig. 9

(a)

(b)

# Fig. 10

# Fig. 11

# Fig. 12

(a)

(b)

# Fig. 13

Fig. 14

201

200

# Fig. 15

# Fig. 16

# Fig. 17

# Fig. 18

500

# Fig. 19

400

# Fig. 20

a)

b)

c)

d)

# Fig. 21

# Fig. 22

# Fig. 23

# Fig. 24

# Fig. 25

# Fig. 26

# Fig. 27

# Fig. 28

σ 1101

σ 1103

1100

# Fig. 29

(a)  (b)  (c)  (d)  (e)

# Fig. 30

(a)

(b)

(c)

(d)

(e)

# Fig. 31

# Fig. 32

(a)

(b)

(c)

Fig. 33

1201

1201

1201

1201

1200

1300

a)

b)

# Fig. 34

1203

1203

1100

a)

1100

1100

1100

1401

b)

1403

1401

1400

c)

Fig. 35

a)

b)

# Fig. 36

1100

a)

1105
1105
1105
1105
1100

b)

# Fig. 37

1601

1601

1601

1601

1601

1601

1600

a)

b)

# Fig. 38

(a)

(b)

(c)

# Fig. 39

# Fig. 40

σ 1101

σ 1103

1701

# Fig. 41

# Fig. 42

a)

b)

c)

d)

# Fig. 43

Fig. 44

(a)

1651

(b)

1651

(c)

1651

(d)

1651

EP 2 204 224 A1

Fig. 45

Fig. 46

(a) 1651

(b) 1751

(c) 1753

(d) 1750

Fig. 47

(a) 1753

(b) 1353

(c) 1351

(d) 1350

(e) 1350

# Fig. 48

(a) ⌒1553

(b) ⌒1553

(c) ⌒1553

⌒1553 (d) ⌒1351

(e) ⌒1450

(f) ⌒1450

EP 2 204 224 A1

# Fig. 49

(a) ⌐1551

(b) ⌐1551

(c) ⌐1551

(d) ⌐1551

⌐1350

(e) ⌐1550

(f) ⌐1550

EP 2 204 224 A1

<div align="center">

**INTERNATIONAL SEARCH REPORT**

</div>

| | |
|---|---|
| | International application No. |
| | PCT/JP2009/060763 |

A.  CLASSIFICATION OF SUBJECT MATTER
A63F9/12(2006.01)i, G09B23/04(2006.01)i, G09B23/26(2006.01)i

According to International Patent Classification (IPC) or to both national classification and IPC

B.  FIELDS SEARCHED

Minimum documentation searched (classification system followed by classification symbols)
A63F9/08, A63F9/12, A63H33/00, A63H33/04-33/14, G09B23/02-23/04,
G09B23/26

Documentation searched other than minimum documentation to the extent that such documents are included in the fields searched

| Jitsuyo Shinan Koho | 1922–1996 | Jitsuyo Shinan Toroku Koho | 1996–2009 |
| Kokai Jitsuyo Shinan Koho | 1971–2009 | Toroku Jitsuyo Shinan Koho | 1994–2009 |

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| A | JP 4-30193 A (Hideo SAGARA, Yasushi KAJIKAWA), 03 February, 1992 (03.02.92), Full text; all drawings (Family: none) | 1-2 |
| A | Microfilm of the specification and drawings annexed to the request of Japanese Utility Model Application No. 90938/1987(Laid-open No. 200867/1988) (Kabushiki Kaisha Sanwa Seizosho), 23 December, 1988 (23.12.88), Full text; all drawings (Family: none) | 1-2 |

|   |   |   |
|---|---|---|
| ☒ Further documents are listed in the continuation of Box C. | ☐ See patent family annex. | |

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered    to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 01 September, 2009 (01.09.09) | 15 September, 2009 (15.09.09) |

| Name and mailing address of the ISA/ | Authorized officer |
|---|---|
| Japanese Patent Office | |
| Facsimile No. | Telephone No. |

Form PCT/ISA/210 (second sheet) (April 2007)

**INTERNATIONAL SEARCH REPORT**

International application No.

PCT/JP2009/060763

C (Continuation).   DOCUMENTS CONSIDERED TO BE RELEVANT

| Category* | Citation of document, with indication, where appropriate, of the relevant passages | Relevant to claim No. |
|---|---|---|
| A | JP 58-49168 A (Tsuyoshi TAKEDA),<br>23 March, 1983 (23.03.83),<br>Full text; all drawings<br>(Family: none) | 1-2 |
| A | JP 3107739 U (Yutaka IKEMA),<br>17 February, 2005 (17.02.05),<br>Full text; all drawings<br>(Family: none) | 1-2 |
| A | WO 2006/075666 A1 (Kyoto University),<br>20 July, 2006 (20.07.06),<br>Full text; all drawings<br>(Family: none) | 1-2 |
| A | JP 3-155891 A (Enpros Beheer B.V.),<br>03 July, 1991 (03.07.91),<br>Full text; all drawings<br>& US 5108100 A1          & EP 502261 A1<br>& NL 8902693 A          & AU 6552890 A<br>& AU 634832 B          & CA 2027170 A | 1-2 |

Form PCT/ISA/210 (continuation of second sheet) (April 2007)

## INTERNATIONAL SEARCH REPORT

| | International application No. |
|---|---|
| | PCT/JP2009/060763 |

**Box No. II**      **Observations where certain claims were found unsearchable (Continuation of item 2 of first sheet)**

This international search report has not been established in respect of certain claims under Article 17(2)(a) for the following reasons:

1. ☐ Claims Nos.:
     because they relate to subject matter not required to be searched by this Authority, namely:

2. ☐ Claims Nos.:
     because they relate to parts of the international application that do not comply with the prescribed requirements to such an extent that no meaningful international search can be carried out, specifically:

3. ☐ Claims Nos.:
     because they are dependent claims and are not drafted in accordance with the second and third sentences of Rule 6.4(a).

**Box No. III**      **Observations where unity of invention is lacking (Continuation of item 3 of first sheet)**

This International Searching Authority found multiple inventions in this international application, as follows:
     The invention of claims 1 - 2 relates to a three-dimensional puzzle forming a regular tetrahedron, a hexahedron, a regular octahedron, a regular dodecahedron or a regular icosahedron.
     The invention of claims 3 - 4 relates to a Fyodorov's space-filling three-dimensional puzzle.

     Here, claim 4 has been described as the "Fyodorov's space-filling three-dimensional puzzle of claim 1". However, the description is judged to mean the "Fyodorov's space-filling three-dimensional puzzle of claim 3", since it is apparent that the description was erroneously written.

1. ☐ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☒ No required additional search fees were timely paid by the applicant. Consequently, this international search report is restricted to the invention first mentioned in the claims; it is covered by claims Nos.:
     Claims 1 - 2.

**Remark on Protest**    the
     ☐ The additional search fees were accompanied by the applicant's protest and, where applicable, payment of a protest fee.

     ☐ The additional search fees were accompanied by the applicant's protest but the applicable protest fee was not paid within the time limit specified in the invitation.

     ☐ No protest accompanied the payment of additional search fees.

Form PCT/ISA/210 (continuation of first sheet (2)) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP S63200867 B
- JP S58049168 B
- JP 3107739 B
- JP 2006075666 A
- JP H03155891 B